# EUROPÄISCHE PATENTSCHRIFT

(11) **EP 3 443 209 B1**
(45) Veröffentlichungstag und Bekanntmachung des Hinweises auf die Patenterteilung: **18.11.2020**
(21) Anmeldenummer: 17713891.4
(22) Anmeldetag: 27.03.2017
(51) Int. Cl.: F01N 3/20, F01N 3/28

(54) **ABGASNACHBEHANDLUNGSVORRICHTUNG MIT KATALYSATOR UND MISCHVORRICHTUNG**
EXHAUST-GAS AFTERTREATMENT DEVICE WITH CATALYTIC CONVERTER AND MIXING DEVICE
DISPOSITIF DE POST-TRAITEMENT DES GAZ D'ÉCHAPPEMENT DOTÉ D'UN CATALYSEUR ET D'UN DISPOSITIF DE MÉLANGE

(30) Priorität: 13.04.2016 DE 102016004333
(43) Veröffentlichungstag der Anmeldung: 20.02.2019
(60) Teilanmeldung: 19175013.2
(73) Patentinhaber: Roth Technik Austria Gesellschaft Mit Beschränkter Haftung, 3193 St. Aegyd a.N. (AT)
(72) Erfinder: SEEGER, Martin, 76597 Loffenau (DE); KOWALSKI, Jan, 76275 Ettlingen (DE); HAAS, Frank, 77889 Seebach (DE)
(74) Vertreter: Wiedemann, Markus
(86) Internationale Anmeldenummer: PCT/EP2017/000368
(87) Internationale Veröffentlichungsnummer: WO 2017/178094

(56) Entgegenhaltungen:
- EP-A1- 0 555 746
- EP-A1- 2 128 398
- EP-A1- 2 719 873
- EP-A1- 2 792 864
- DE-A1- 4 121 940
- US-A1- 2014 196 441

## Beschreibung

Die Erfindung betrifft eine Abgasnachbehandlungsvorrichtung beinhaltend wenigstens einen SCR-Katalysator, welchem in Strömungsrichtung eines Abgasstroms einer Brennkraftmaschine gesehen wenigstens eine Mischvorrichtung vorgeordnet ist, durch welche Reduktionsmittel in den Abgasstrom eingebracht wird, gemäß dem Oberbegriff von Anspruch 1.

Bei sogenannten SCR-Katalysatoren erfolgt eine selektive katalytische Reduktion von Stickoxiden in einer Abgasströmung zu unschädlichen Stoffen. Reduktionskatalysatoren haben die Aufgabe, die Abgase einer Brennkraftmaschine mittels selektiver katalytischer Reaktion von Stickoxiden zu reinigen, ohne dass hierbei das eingesetzte Reduktionsmittel an die Umwelt abgegeben wird. Der Reduktionskatalysator reduziert mittels eines Reduktionsmittels (meist eine Harnstoff-Wasser-Lösung) unter Anwesenheit von Sauerstoff Stickoxide zu molekularem Stickstoff und Wasser (SCR-Verfahren). Als Quelle des Reduktionsmittels wird in der Regel eine das Reduktionsmittel spendende Substanz wie Harnstoff zugegeben, welcher im Abgas Ammoniak freisetzt. Im Reduktionskatalysator wird dann das Ammoniak mit den Stickoxiden zu molekularem Stickstoff und Wasser reduziert. Hierzu ist in einem Vorratsbehälter eine wässrige Harnstofflösung bevorratet, die über eine Zuführleitung einem dem Katalysator vorgeordnetes Abgasrohr zugeleitet wird, um ein Gasgemisch von Abgas und Reduktionsmittel zu erzeugen. Eine solche Abgasnachbehandlungsvorrichtung mittels Reduktionskatalysator ist beispielsweise in der DE 20 2006 020 U1 beschrieben.

Das Gasgemisch aus Abgas und Reduktionsmittel ist nach mindestens teilweiser Umwandlung des Harnstoffs in Ammoniak dem Substrat des SCR-Katalysators mit möglichst hoher Strömungs- und Konzentrationsgleichverteilung zuzuführen, um eine hohe Reduktionsrate bei der Abgasentstickung zu ermöglichen. Insbesondere sind Ablagerungen von Zwischenprodukten an den Oberflächen von strömungsführenden Bauteilen zu vermeiden.

Eine Mischvorrichtung ist beispielsweise aus der EP 0 555 746 B1 bekannt. Dort wird die Abgasströmung mittels eines tangential angeordneten Zuströmstutzens in die Ringkammer eingeströmt. Von dort gelangt das Abgas mittels in einer Wandung eines konischen Innenrohres ausgebildeten Öffnungen in das Innere des Innenrohres, in welches axial Reduktionsmittel eingespritzt wird, um dieses mit dem Abgasstrom zu vermischen. An der radial inneren Umfangswand des Innenrohres sind Leitschaufeln bzw. Leitbleche angeordnet, welche in das Innere des Innenrohres hineinragen, um die durch die Öffnungen in der Wandung des Innenrohres ins Innere eintretenden Abgasstrom in Drall zu versetzen. Dadurch soll eine bessere Durchmischung von Reduktionsmittel und Abgas im Inneren des Innenrohres erzielt werden. Problematisch dabei ist einerseits, dass eine definierte Umfangsströmung in der Ringkammer nicht sichergestellt ist. Andererseits entsteht bei der Umlenkung der Abgasströmung von der Umfangsrichtung in der Ringkammer in eine durch die Öffnungen hindurch nach radial innen gerichtete Strömung ein relativ großer Strömungswiderstand, den es zu überwinden gilt. Wegen der ungünstigen Strömungsverhältnisse ist zu erwarten, dass der Durchmischungsgrad des Reduktionsmittels mit dem Abgas nicht allzu hoch ist bzw. unerwünschte Ablagerungen von Abgas- oder Reduktionsmittelbestandteilen an den abgasführenden Wänden zu befürchten sind.

Eine weitere Abgasnachbehandlungsvorrichtung ist aus WO 2014/195576 A1 bekannt. EP 2 719 873 A1 beschreibt eine gattungsgemäße Abgasnachbehandlungsvorrichtung.

Der Erfindung liegt die Aufgabe zugrunde, eine Abgasnachbehandlungsvorrichtung mit einer Mischvorrichtung derart weiter zu entwickeln, dass sie aufgrund verbesserter Strömungsverhältnisse eine bessere Durchmischung des Reduktionsmittels mit dem Abgasstrom erlaubt.

Diese Aufgabe wird erfindungsgemäß durch die Merkmale von Anspruch 1 gelöst.

### Offenbarung der Erfindung

Gemäß der Erfindung wird eine Abgasnachbehandlungsvorrichtung beinhaltend wenigstens einen SCR-Katalysator vorgeschlagen, welchem in Strömungsrichtung eines Abgasstroms einer Brennkraftmaschine gesehen wenigstens eine Mischvorrichtung vorgeordnet ist, durch welche Reduktionsmittel in den Abgasstrom eingebracht wird, wobei die Mischvorrichtung wenigstens Folgendes umfasst: Ein Gehäuse mit einer Abgaseinlassöffnung, in welches der Abgasstrom eingeführt wird und mit einer Abgasauslassöffnung, aus welchem der Abgasstrom ausgeführt wird, ein im Inneren des Gehäuses mit wenigstens einem Teil aufgenommenes und/oder mit wenigstens einem Teil wenigstens einen Teil des Gehäuses bildendes Außenrohr, ein innerhalb des Außenrohrs angeordnetes, mehrere Durchgangsöffnungen in seiner Rohrwandung aufweisendes Innenrohr mit einem ersten, einen Auslass bildenden axialen Ende, welches mit der Abgasauslassöffnung in Strömungsverbindung steht, eine radial zwischen dem Innenrohr und dem Außenrohr ausgebildete Kammer, welche mit der Abgasauslassöffnung in Strömungsverbindung steht, ein Einspritzmittel, durch welches Reduktionsmittel in ein zweites axiales Ende des Innenrohrs gelangt, wobei in eine offene Querschnittsfläche eines zweiten, einen Einlass bildenden axialen Endes des Innenrohrs der gesamte in die Abgaseinlassöffnung eingeführte Abgasstrom oder nur ein Teil davon im Wesentlichen axial eingeführt wird, wobei ein Teil des eingeführten Abgasstroms entlang des Innenrohrs in Axialrichtung durch das Innere des Innenrohrs strömt, wobei durch die Durchgangsöffnungen des Innenrohrs hindurch wenigstens ein Teil des über die Querschnittsfläche des zweiten axialen Endes in das Innere des Innenrohrs eingeströmten Abgasstroms nach radial außen in die Kammer strömt.

Unter einer im Wesentlichen axialen Einführung des gesamten in die Abgaseinlassöffnung eingeführten Abgasstrom oder nur eines Teils davon in die offene Querschnittsfläche des zweiten, den Einlass bildenden axialen Endes des Innenrohrs soll verstanden werden, dass die Hauptbewegungsrichtung des (Teil-)Abgasstroms und auch dessen Zuführung in das zweite, den Einlass bildende Ende des Innenrohrs insgesamt in axialer Richtung stattfindet, auch wenn der (Teil-)Abgasstroms beispielsweise einen Drall aufweist oder spiralförmig verläuft und daher zusätzlich noch Nebenbewegungen in radialer Richtung oder auch in Umfangsrichtung aufweist.

Demgegenüber findet gemäß WO 2014/195576 A1 eine Zuströmung des Abgasstroms in Bezug auf das Innenrohr ausschließlich von außen und auch nur in radialer Richtung statt.

Das Innenrohr ist daher perforiert, so dass sich der durch die Abgaseinlassöffnung und das zweite, den Einlass bildende axiale Ende in das Innere des Innenrohrs eingeströmte Abgasstrom wenigstens teilweise durch die Durchgangsöffnungen hindurch nach radial außen in die Kammer strömt. Ein weiterer Teil des Abgasstroms passiert indes das Innere des Innenrohrs und tritt über das erste, den Auslass bildende axiale Ende des Innenrohrs aus diesem aus, um sich mit dem Teil des Abgasstroms zu vereinigen, der die in Bezug auf das Innenrohr radial äußere Kammer in axialer Richtung durchströmt hat.

Das gemäß der Erfindung axiale Einströmen des gesamten in die Abgaseinlassöffnung eingeströmten Abgasstroms oder wenigstens eines Teils dieses Abgasstroms über das zweite, den Einlass bildende axiale in das Innenrohr in Kombination mit einer ebenfalls axialen Einspritzung des Reduktionsmittels in den Abgasstrom bzw. den Teil des Abgasstroms im Inneren des Innenrohrs sorgt für eine demgegenüber verbesserte Durchmischung des Abgasstroms mit dem Reduktionsmittel.

Beim Hindurchströmen des Teilabgasstroms durch die Durchgangsöffnungen des Innenrohrs von innen nach außen findet vorteilhaft eine Tropfenzerkleinerung der mit dem Abgasstrom mitgerissenen Reduktionsmitteltröpfchen statt, was eine verbesserte Verdampfung des Reduktionsmittels und eine gute Durchmischung des Reduktionsmittels mit dem Abgas mit sich bringt. Weiterhin wird dadurch auch eine verbesserte Drallbildung und Verwirbelung der Abgasströmung hervorgerufen, was ebenfalls eine verbesserte Durchmischung bedingt, weil dann die Verweilzeit der Reduktionsmitteltröpfchen im Abgasstrom länger ist. Weiterhin wird dadurch auch das Innenrohr von heißem Abgas in der Kammer von außen umströmt, was die Durchmischung in der äußeren Kammer ebenfalls fördert. Die durchströmte Perforation des Innenrohrs führt weiterhin zu einem reduzierten Abgasgegendruck. Nicht zuletzt entstehen hohe Turbulenzfelder im Bereich der Durchgangsöffnungen des Innenrohrs, welche zu einer guten Durchmischung ebenfalls beitragen.

Gemäß der Erfindung ist weiterhin ein hohles mit dem Innenrohr koaxiales Einströmkegelrohr mit einer im Querschnitt gesehen kegelförmig verlaufenden Wandung vorgesehen, von welchem ein erstes Ende einen kleineren Durchmesser aufweist als ein zweites Ende. Die Wandung des Einströmkegelrohrs weist wenigstens eine Wandungsöffnung auf, welche in Bezug zur Wandung außen mit der Abgaseinlassöffnung des Gehäuses und in Bezug zur Wandung innen mit dem zweiten, den Einlass bildenden axialen Ende des Innenrohrs derart strömungsleitend verbunden ist, dass durch die wenigstens eine Wandungsöffnung hindurch der gesamte in die Abgaseinlassöffnung des Gehäuses eingeführte Abgasstrom oder nur ein Teil davon in das Innere des Einströmkegelrohrs geführt wird. Dabei steht das zweite Ende des Einströmkegelrohrs mit dem zweiten, den Einlass bildenden axialen Ende des Innenrohrs derart strömungsleitend in Verbindung, dass der gesamte in das Innere des Einströmkegelrohrs geführte Abgasstrom in das zweite, den Einlass bildende axiale Ende des Innenrohrs eingeführt wird. Dabei ist das Einspritzmittel angeordnet, dass es Reduktionsmittel in das Innere des Einströmkegelrohrs einspritzt. Insbesondere kann das Einspritzmittel Reduktionsmittel in das erste Ende des Einströmkegelrohrs einspritzen, so dass das Reduktionsmittel in das Innere des Einströmkegelrohrs gelangt. Weiterhin vorteilsweise kann das Einspritzmittel beispielsweise koaxial in dem ersten Ende des Einströmkegelrohrs gehalten sein, beispielsweise in einer Öffnung des ersten Endes.

Insbesondere weist die Wandung des Einströmkegelrohrs mehrere, vorzugsweise in Umfangsrichtung verteilt angeordnete Wandungsöffnungen auf.

Dabei kann insbesondere das zweite, den Einlass bildende axiale Ende des Innenrohrs den gleichen Durchmesser in Bezug zu dem zweiten Ende des Einströmkegelrohrs aufweisen und mit diesem direkt und koaxial zu einer Baueinheit verbunden sein. Gemäß einer Weiterbildung kann daher das Einströmkegelrohr zusammen mit dem Innenrohr eine Baueinheit bilden, welche in dem Gehäuse lösbar oder unlösbar befestigt ist.

In diese Baueinheit wird dann entweder der gesamte in der Abgasnachbehandlungsvorrichtung zirkulierte Abgasstrom von außen über die Wandungsöffnungen der Wandung in das Innere des Einströmkegelrohrs und von dort dann in das Innenrohr eingeführt. Dann wird die Baueinheit nicht von einem Bypass-Abgasteilstrom umströmt und das Reduktionsmittel wird mittels des Einspritzmittels in den gesamten Abgasstrom eingespritzt.

Alternativ wird lediglich ein erster Abgasteilstrom des gesamten in der Abgasnachbehandlungsvorrichtung zirkulierten Abgasstroms von außen über die Wandungsöffnungen der Wandung in das Innere des Einströmkegelrohrs und von dort dann in das Innenrohr eingeführt. In diesem Fall wird das Reduktionsmittel mittels des Einspritzmittels lediglich in den in das Innere der Baueinheit gelangten Teilabgasstrom eingespritzt. Der andere zweite Abgasteilstrom umströmt als Bypass-Abgasteilstrom die Baueinheit, welcher frei von einer Einspritzung von Reduktionsmittel bleibt. Beide Abgasteilströme ergeben dann zusammen den gesamten Abgasteilstrom.

In beiden Fällen gelangt ein Teil des in das Innenrohr eingeführten gesamten Abgasstroms oder ersten Abgasteilstroms durch die Durchgangsöffnungen in der Rohrwandung des Innenrohrs aus dem Inneren des Innenrohrs in die radial äußere Kammer und vereinigt sich später mit dem restlichen die Kammer durchströmenden Abgasstrom.

Durch in den Unteransprüchen aufgeführte Merkmale sind vorteilhafte Ausführungen der Erfindung angegeben.

Bevorzugt ist die Abgasnachbehandlungsvorrichtung ausgebildet, dass der in die Kammer geströmte Teil des Abgasstroms sich mit dem im Inneren des Innenrohrs strömenden Teil des Abgasstroms in Strömungsrichtung hinter dem Innenrohr vereinigt.

Gemäß einer Weiterbildung kann sich das Innenrohr in Strömungsrichtung des Abgasstroms gesehen kegelförmig verjüngen, wobei das Innenrohr an seinem zweiten, den Einlass bildenden axialen Ende einen größeren Durchmesser aufweist als an seinem ersten, den Auslass bildenden axialen Ende.

Insbesondere kann das erste, den Auslass bildende axiale Ende des Innenrohrs einen Deckel mit Durchgangsöffnungen aufweisen oder auch ohne Deckel und insbesondere vollständig offen ausgeführt sein.

Gemäß Varianten kann in das zweite, den Einlass bildende axiale Ende des Innenrohrs der gesamte in die Abgaseinlassöffnung des Gehäuses eingeführte Abgasstrom oder nur ein Teil des gesamten, in die Abgaseinlassöffnung des Gehäuses eingeführten Abgasstroms eingeführt werden.

Gemäß einer Fortbildung kann im Bereich der wenigstens einen Wandungsöffnung des Einströmkegelrohrs ein erstes Leitmittel derart angeordnet sein, dass bei einer Anströmung des Einströmkegelrohrs von außen und vom ersten Ende her und bei einem Durchströmen der wenigstens einen Durchgangsöffnung sich im Inneren des Einströmkegelrohrs ein spiralförmig verlaufender Abgasstrom mit einer Komponente in Axialrichtung und einer Komponente in Umfangsrichtung ausbildet.

Dabei kann das erste Leitmittel wenigstens eine Leitschaufel umfassen, welche in Bezug zur Wandung des Einströmkegelrohrs winkelig angeordnet ist und in Bezug zur Wandung nach außen oder nach innen weist. Daher kann das Leiten des durch die wenigstens eine Wandungsöffnung strömenden (Teil-)Abgasstroms durch die wenigstens eine Leitschaufel vor oder nach dem Passieren der Wandungsöffnung durch den (Teil-)Abgasstrom erfolgen.

In Bezug auf die Fertigung besonders vorteilhaft kann die wenigstens eine Leitschaufel einstückig mit der Wandung des Einströmkegelrohrs ausgeführt und in einem Verbindungsbereich mit der Wandung in Bezug zur Wandung nach außen oder nach innen abgebogen sein, wodurch dann die Wandungsöffnung ausgebildet wird.

Bevorzugt kann das Einspritzmittel wenigstens eine Einspritzdüse aufweisen und in dem ersten Ende des Einströmkegelrohrs koaxial gehalten sein. Durch die Einspritzdüse kann dann Reduktionsmittel in Form eines Spraykegels aus- und in den (Teil-) Abgasstrom axial eingespritzt werden. Unter einer axialen Einspritzung ist dann zu verstehen, dass eine Mittelachse des Spraykegels eine axiale oder koaxiale Ausrichtung in Bezug zu einer Mittelachse des spiralförmig verlaufenden (Teil-)Abgasstroms aufweist.

Insbesondere kann daher das Einspritzmittel in Bezug zu dem Einströmkegelrohr derart angeordnet sein, dass das Reduktionsmittel zentral und koaxial in den spiralförmig verlaufenden Abgasstrom im Inneren des Einströmkegelrohrs eingespritzt wird.

Auch kann vorgesehen sein , dass in die Querschnittsfläche des zweiten, den Einlass bildenden axialen Endes des Innenrohrs ein erster Teilabgasstrom des in die Abgaseinlassöffnung eingeführten Abgasstroms im Wesentlichen axial eingeführt und ein zweiter Teilabgasstrom des in die Abgaseinlassöffnung eingeführten Abgasstroms in eine Ringkammer zwischen dem Außenrohr und einer radial inneren Gehäusewandung des Gehäuses eingeführt wird.

Dabei können der erste Teilabgasstrom und der zweite Teilabgasstrom beispielsweise zusammen den gesamten in die Abgaseinlassöffnung eingeführten Abgasstrom bilden. Durch diese Maßnahme wird lediglich in den in das Innenrohr eingeführten oder eingespritzten ersten Teilabgasstrom des Abgasstroms Reduktionsmittel eingespritzt, während der zweite Teilabgasstrom ohne Zusetzen von Reduktionsmittel radial außerhalb des Außenrohrs axial entlangläuft. Erst nach Austreten dieses ersten Teilabgasstroms aus dem Innenrohr und nach Vereinigung mit dem zunächst reduktionsmittellosen zweiten Teilabgasstrom gelangt dieser letztere Teilabgasstrom ebenfalls in Kontakt mit dem dann schon zumindest teilweise mit dem ersten Teilabgasstrom durchmischten Reduktionsmittel. Daher kann sich der zweite Teilabgasstrom in Strömungsrichtung gesehen hinter dem auslassseitigen Ende des Außenrohrs mit dem ersten Teilabgasstrom vereinigen.

Gemäß einer Fortbildung weist die Abgasnachbehandlungsvorrichtung ein beispielsweise rohrförmiges oder zylindrisches erstes Gehäuseteil mit einer Abgaseinlassöffnung zum Einführen des Abgasstroms in das erste Gehäuseteil und mit einer Abgasauslassöffnung zum Ausführen des Abgasstroms aus dem ersten Gehäuseteil sowie ein beispielsweise rohrförmiges oder zylindrisches zweites Gehäuseteil mit einer Abgaseinlassöffnung zum Einführen des Abgasstroms in das zweite Gehäuseteil und mit einer Abgasauslassöffnung zum Ausführen des Abgasstroms aus dem zweiten Gehäuseteil auf, wobei das erste Gehäuseteil und das zweite Gehäuseteil parallel zueinander angeordnet sind, weiterhin eine Überströmkammer, welche die Abgasauslassöffnung des ersten Gehäuseteils mit der Abgaseinlassöffnung des zweiten Gehäuses verbindet und an dem ersten Gehäuseteil und dem zweiten Gehäuseteil derart stirnseitig angeordnet ist, das die Strömungsrichtung des Abgasstroms in dem ersten Gehäuseteil gegenüber der Strömungsrichtung des Abgasstroms in dem zweiten Gehäuseteil gegenläufig ist, wobei in der Überströmkammer ein zweites Leitmittel für den von der Abgasauslassöffnung des ersten Gehäuseteils in die Abgaseinlassöffnung des zweiten Gehäuseteils strömenden Abgasstrom angeordnet ist, welche den ersten Teilabgasstrom des Abgasstroms in das Innenrohr derart einleitet, dass sich im Inneren des Innenrohrs ein spiralförmig verlaufender Abgasstrom mit einer Komponente in Axialrichtung und einer Komponente in Umfangsrichtung sowie mit einer Strömungsmittelachse ausbildet, und wobei das Einspritzmittel an einem Überströmkammergehäuse der Überströmkammer derart angeordnet ist, dass Reduktionsmittel in den im Inneren des Innenrohrs spiralförmig verlaufenden ersten Teilabgasstrom des Abgasstroms im Wesentlichen koaxial mit der Mittelachse des Innenrohrs eingespritzt wird.

Dabei beinhaltet das zweite Leitmittel wenigstens eine Leitschaufel, welche sich von einer inneren Wandung des Überströmkammergehäuses in einer den Strömungsquerschnitt durch die Überströmkammer verengenden Weise weg erstreckt. Mit anderen Worten verengt dann die wenigstens eine Leitschaufel den Strömungsquerschnitt für den Abgasstrom durch die Überströmkammer und leitet ihn gleichzeitig spiralförmig in die Abgaseinlassöffnung bzw. in das Innenrohr.

Dabei ist die wenigstens eine Leitschaufel senkrecht zu einer gedachten Ebene angeordnet, welche senkrecht zu einer Mittelachse des ersten Gehäuseteils und senkrecht zu einer Mittelachse des zweiten Gehäuseteils ist.

Daher ist ein beispielsweise zweites Leitmittel vorgesehen, welche den Abgasstrom in die Abgaseinlassöffnung bzw. in das Innenrohr derart einleitet, dass sich im Inneren des Innenrohrs ein spiralförmiger Abgasstrom mit einer Komponente in Axialrichtung und einer Komponente in Umfangsrichtung sowie mit einer Strömungsmittelachse ausbildet, bei dem die in Axialrichtung wirkende Strömungsgeschwindigkeit ausgehend von der Strömungsmittelachse gesehen in radialer Richtung ansteigt, wobei die Einspritzmittel derart angeordnet sind, dass das Reduktionsmittel in den spiralförmigen Abgasstrom im Wesentlichen koaxial mit der Strömungsmittelachse des dort spiralförmigen Abgasstroms eingespritzt wird. Die Strömungsmittelachse ist beispielsweise koaxial mit der Mittelachse des Innenrohrs.

Bei einer derartigen Ausbildung ist die Strömungsgeschwindigkeit der in Axialrichtung wirkenden Komponente des Abgasstroms im Bereich der Strömungsmittelachse am geringsten und kann beispielsweise sogar gleich Null sein. Ausgehend von der Strömungsmittelachse steigt dann die Strömungsgeschwindigkeit der in Axialrichtung wirkenden Komponente des Abgasstroms in radialer Richtung gesehen an, um kurz vor der radial inneren Wandung des Innenrohrs einen Maximalwert zu erreichen. Unmittelbar an der radial inneren Wandung des Innenrohrs ist die Strömungsgeschwindigkeit naturgemäß gleich Null.

Die sehr geringe Strömungsgeschwindigkeit des Abgasstroms im Bereich der Strömungsmittelachse und damit im Bereich der Einspritzung oder Eindüsung des Reduktionsmittels ist insofern vorteilhaft, als sich am Einspritzpunkt des Reduktionsmittels der Einspritzkegel sehr gut ausbilden kann. Dies sorgt für eine gute Durchmischung des Reduktionsmittels mit dem Abgasstrom. Die Einspritzrichtung des Reduktionsmittels ist dabei bevorzugt in Strömungsrichtung der in Axialrichtung wirkenden Komponente des Abgasstroms.

Weiterhin werden die im Bereich der der Strömungsmittelachse eingespritzten Reduktionsmitteltröpfchen durch die innerhalb des Innenrohrs wirkende spiralförmig verlaufende Abgasströmung nach radial außen geführt und mit Hilfe der Zentrifugalkräfte gut mit der Abgasströmung vermischt.

Nicht zuletzt besitzt die Abgasströmung aufgrund ihrer spiralförmig verlaufenden Ausbildung in dem Innenrohr gegenüber einer ausschließlich axialen Strömung einen größeren Strömungsweg und eine größere Verweildauer, was sich ebenfalls in einer verbesserten Durchmischung des Reduktionsmittels mit dem Abgasstrom resultiert.

Gemäß einer weiterbildenden Maßnahme kann das Einspritzmittel eine Einspritzdüse mit einem Düsenkörper aufweisen, welcher radial wenigstens teilweise von einem Abschirmkörper umgeben ist, wobei radial zwischen dem Düsenkörper und dem Abschirmkörper ein Raum ausgebildet ist, in welchen wenigstens ein Teilabgasstrom des Abgasstroms eingeströmt wird. Der Abschirmkörper stellt dann beispielsweise insbesondere in Bezug zu dem oben erwähnten Einströmkegelrohr, zu dem Überströmkammergehäuse oder zu dem Innenrohr ein separates Bauelement dar.

Der Abschirmkörper kann dabei bevorzugt durch ein zylindrisches, teilzylindrisches oder kegelförmiges Rohr gebildet werden.

Der Abschirmkörper bewirkt, dass das über die Düse eingedüste oder eingespritzte Reduktionsmittel nicht unmittelbar an der Eindüsungs- oder Einspritzstelle von dem Abgasstrom in radialer Richtung abgelenkt wird. Der erste Teilabgasstrom wird bevorzugt in axialer Richtung, d.h. parallel zu einer Mittelachse der Düse über das einlassseitige Ende des Innenrohrs in den Ringraum eingeführt.

Weiterhin wird eine Abgasnachbehandlungsvorrichtung beinhaltend wenigstens einen SCR-Katalysator vorgeschlagen, welchem in Strömungsrichtung eines Abgasstroms einer Brennkraftmaschine gesehen eine Mischvorrichtung vorgeordnet ist, welche Reduktionsmittels in den Abgasstrom einbringt, wobei die Mischvorrichtung wenigstens Folgendes umfasst: Ein Gehäuse mit einer Abgaseinlassöffnung, in welches der Abgasstrom eingeführt wird und mit einer Abgasauslassöffnung, aus welcher der Abgasstromausgeführt wird, ein im Inneren des Gehäuses aufgenommenes Außenrohr mit einem einlassseitigen Ende und einem auslassseitigen Ende, ein innerhalb des Außenrohrs angeordnetes Innenrohr mit einem einlassseitigen Ende und einem auslassseitigen Ende, Einspritzmittel, durch welche das Reduktionsmittel in das einlassseitige Ende des Innenrohrs eingespritzt wird, wobei das einlassseitige Ende des Innenrohrs und das einlassseitige Ende des Außenrohrs derart mit der Abgaseinlassöffnung in Strömungsverbindung stehen, dass der in die Abgaseinlassöffnung einströmende Abgasstrom in einen ersten, das Innenrohr durchströmenden Teilabgasstrom und einen zweiten, eine radial zwischen dem Innenrohr und dem Außenrohr angeordnete Ringkammer durchströmenden Teilabgasstrom aufgeteilt wird, wobei der erste Teilabgasstrom und der zweite Teilabgasstrom sich im Bereich des auslassseitigen Endes des Innenrohrs und des auslassseitigen Endes des Außenrohrs vereinigen.

Mit anderen Worten wird zunächst nur der erste, im Inneren des Innenrohrs strömende Teilabgasstrom mit Reduktionsmittel versetzt. Erst nach Austreten dieses ersten Teilabgasstroms aus dem Innenrohr und nach Vereinigung mit dem zunächst reduktionsmittellosen zweiten Teilabgasstrom gelangt dieser letztere Teilabgasstrom ebenfalls in Kontakt mit dem dann schon zumindest teilweise mit dem ersten Teilabgasstrom durchmischten Reduktionsmittel.

Dadurch kommen die Reduktionsmitteltröpfchen in Kontakt mit dem durch die heißen Abgase des zweiten Teilgasstroms in der Ringkammer umströmten Innenrohr, was deren Verdampfung und Durchmischung mit dem ersten Teilabgasstrom fördert. Weiterhin wird auch der zweite Teilabgasstrom durch den Kontakt mit der äußeren Umfangsfläche des Innenrohrs erwärmt und kann dann beim Kontakt mit dem ersten Teilabgasstrom im Bereich des auslassseitigen Endes des Innenrohrs und des auslassseitigen Endes des Außenrohrs die in dem ersten Teilabgasstrom noch nicht verdampften Reduktionsmitteltröpfen zum Verdampfen bringen.

Gemäß einer Weiterbildung weisen die Einspritzmittel eine Düse mit einem Düsenkörper auf, durch welche das Reduktionsmittel in das einlassseitige Ende des Innenrohrs eingespritzt wird, wobei der Düsenkörper radial wenigstens teilweise von einem Abschirmkörper umgeben ist, wobei radial zwischen dem Düsenkörper und dem Abschirmkörper ein Ringraum ausgebildet ist, in welchen der erste Teilabgasstrom des Abgasstroms einströmt. Der Abschirmkörper kann dabei bevorzugt durch ein zylindrisches, teilzylindrisches oder kegelförmiges Rohr gebildet werden.

Der Abschirmkörper bewirkt, dass das über die Düse eingedüste oder eingespritzte Reduktionsmittel nicht unmittelbar an der Eindüsungs- oder Einspritzstelle von dem Abgasstrom in radialer Richtung abgelenkt wird. Der erste Teilabgasstrom wird bevorzugt in axialer Richtung, d.h. parallel zu einer Mittelachse der Düse über das einlassseitige Ende des Innenrohrs in den Ringraum eingeführt.

Im Rahmen der Erfindung liegt auch jegliche Kombination der oben beschriebenen Aspekte und Merkmale der Erfindung untereinander.

Die genaue Funktionsweise der Abgasnachbehandlungsvorrichtung wird durch die folgende Beschreibung von Ausführungsbeispielen deutlich.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Identische bzw. gleich wirkende Bauteile und Baugruppen sind in unterschiedlichen Ausführungsformen jeweils mit denselben Bezugszahlen bezeichnet.

### Zeichnung

Ausführungsbeispiele der Erfindung sind in der Zeichnung dargestellt und in der nachfolgenden Beschreibung näher erläutert. In der Zeichnung zeigt
- Fig.1: eine perspektivische Ansicht einer Abgasnachbehandlungsvorrichtung mit einer Mischvorrichtung gemäß der Erfindung;
- Fig.2: einen Längsschnitt der Abgasnachbehandlungsvorrichtung gemäß einer Ausführungsform entlang der Linie II-II von Fig.1;
- Fig.3: einen Querschnitt der Abgasnachbehandlungsvorrichtung von Fig.2 entlang der Linie III-III von Fig.1;
- Fig.4: einen Längsschnitt der Abgasnachbehandlungsvorrichtung von Fig.2 entlang der Linie IV-IV von Fig.1;
- Fig.5: einen Längsschnitt einer Abgasnachbehandlungsvorrichtung mit einer Mischvorrichtung gemäß einer weiteren bevorzugten Ausführungsform der Erfindung;
- Fig.6: einen Längsschnitt der Abgasnachbehandlungsvorrichtung mit einer Mischvorrichtung gemäß einer weiteren bevorzugten Ausführungsform der Erfindung, bei welcher die Ausführungsform gemäß Fig.1 bis Fig.4 und die Ausführungsform von Fig.5 miteinander kombiniert sind;
- Fig.7A: eine Seitenansicht einer Umlenkschale des Gehäuses der Abgasnachbehandlungsvorrichtung mit integrierten Drallerzeugungs- und Einspritzmitteln für das Reduktionsmittel gemäß einer Ausführungsform die nicht Teil der Erfindung ist;
- Fig.7B: einen Querschnitt durch die Umlenkschale von Fig.7A entlang der Linie C-C von Fig.7A;
- Fig.8: eine vergrößerte Ansicht der in die Umlenkschale von Fig.7A und 7B integrierten Einspritzmittel mit einem Abschirmkörper gemäß einer Ausführungsform die nicht Teil der Erfindung ist;
- Fig.9A: eine Seitenansicht einer Umlenkschale des Gehäuses der Abgasnachbehandlungsvorrichtung mit integrierten Drallerzeugungs- und Einspritzmitteln für das Reduktionsmittel gemäß einer Ausführungsform die nicht Teil der Erfindung ist;
- Fig.9B: einen Querschnitt durch die Umlenkschale von Fig.9A entlang der Linie C-C von Fig.9A;
- Fig.10: eine vergrößerte Ansicht der in die Umlenkschale von Fig.9A und 9B integrierten Einspritzmittel mit Abschirmkörper gemäß einer Ausführungsform die nicht Teil der Erfindung ist;
- Fig.11: einen Längsschnitt einer Abgasnachbehandlungsvorrichtung gemäß der Ausführungsform der Erfindung entlang der Linie II-II von Fig.1;
- Fig.12: eine Einzeldarstellung einer Baueinheit aus einem perforierten Innenrohr und einem Einströmkegelrohr der Ausführungsform von Fig.12;
- Fig.13A: eine in Einströmrichtung gesehen vordere Ansicht des Einströmkegelrohrs von Fig.12;
- Fig.13B: eine seitliche Ansicht des Einströmkegelrohrs von Fig.12;
- Fig.13C: eine perspektivische Ansicht des Einströmkegelrohrs von Fig.12;
- Fig.14: einen Längsschnitt der Abgasnachbehandlungsvorrichtung von Fig.12 entlang der Linie IV-IV von Fig.1;
- Fig.15: einen Längsschnitt einer Abgasnachbehandlungsvorrichtung gemäß einer Ausführungsform die nicht Teil der Erfindung ist entlang der Linie II-II von Fig.1.

### Beschreibung der Ausführungsbeispiele

In den Figuren sind bevorzugte Ausführungsformen einer Abgasnachbehandlungsvorrichtung 1 einer Brennkraftmaschine eines Fahrzeugs gezeigt, insbesondere einer selbstzündenden Dieselbrennkraftmaschine eines schweren Nutzfahrzeugs. Denkbar ist die Verwendung der Abgasnachbehandlungsvorrichtung 1 jedoch in jeder Art von Fahrzeug wie bei geländegängigen oder straßengebundenen Fahrzeugen sowie auch für stationäre Brennkraftmaschinen.

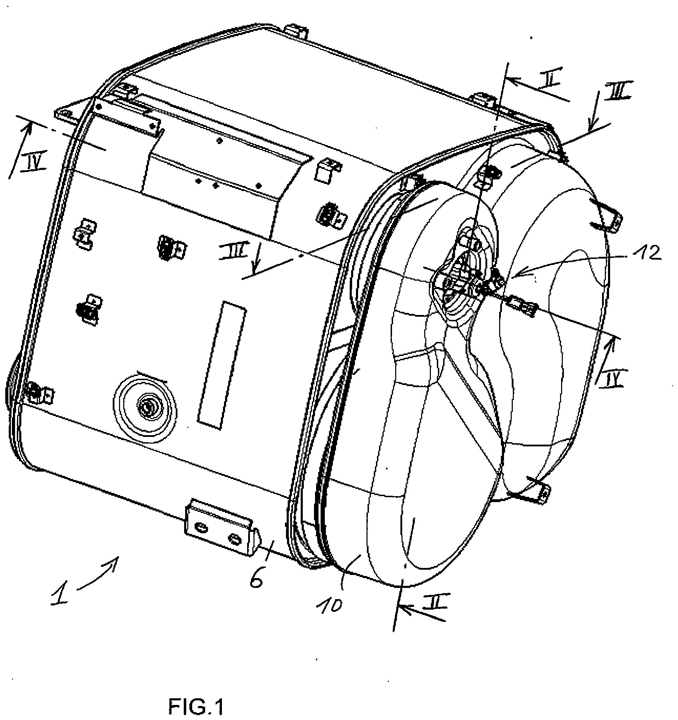

**Fig.1** bis **Fig.4** zeigen eine bevorzugte Ausführungsform der Abgasnachbehandlungsvorrichtung 1. Die Brennkraftmaschine erzeugt einen durch in **Fig.1** durch einen Pfeil 2 symbolisierten Abgasstrom, welcher nach seiner Erzeugung in eine Zuströmöffnung 4 eines Gesamtgehäuses 6 eingespeist wird. Innerhalb des Gehäuses 6 durchströmt der Abgasstrom 2 beispielsweise einen Oxidationskatalysator DOC, einen Dieselpartikelfilter DPF, eine Mischvorrichtung 8 sowie einen Reduktionskatalysator SCR bevorzugt in dieser Reihenfolge, bevor der Abgasstrom 2 das Gehäuse 6 über eine in den Figuren nicht sichtbare Abströmöffnung wieder verlässt.

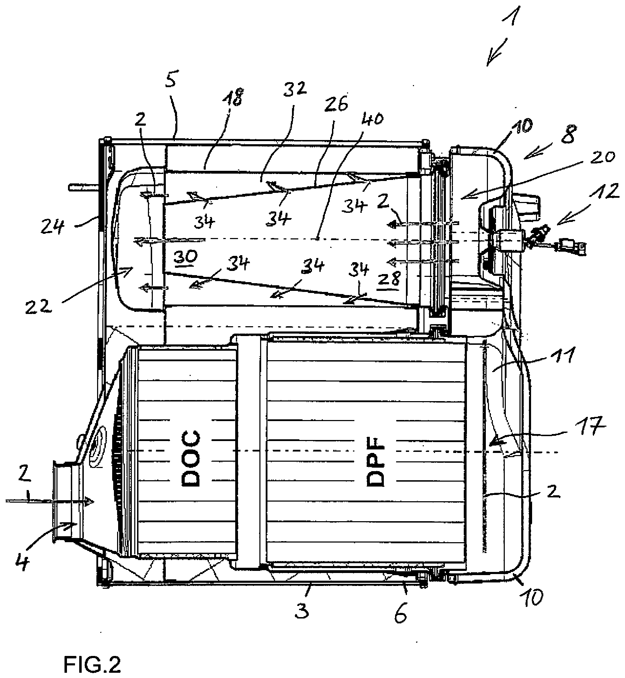

Der Oxidationskatalysator DOC und Dieselpartikelfilter DPF sind hier bevorzugt in einem ersten Gehäuseteil des Gesamtgehäuses 6 koaxial hintereinander angeordnet, wobei an dem partikelfilterseitigen Ende oder an einer Abgasauslassöffnung 17 des ersten Gehäuseteils 3 ein eine Überströmkammer 11 hausendes oder einschließendes Überströmkammergehäuse 10 lösbar befestigt ist, beispielsweise über eine Schelle oder einen Spannring, welche den Abgasstrom 2 um ca. 90 Grad umlenkt (in **Fig.2** nach oben). Zuströmseitig ist das Überströmkammergehäuse 10 daher an den Ausgang des Partikelfilters DPF angeschlossen.

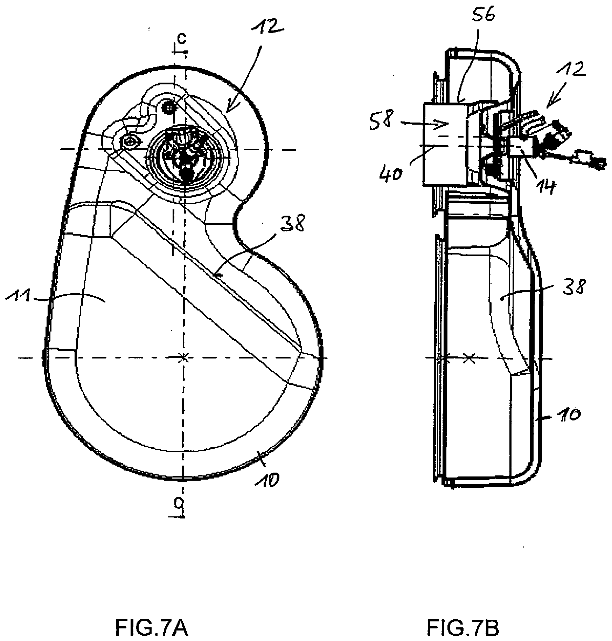

Abströmseitig in Bezug auf das Überströmkammergehäuse 10 ist wenigstens teilweise in dem und an dem Überströmkammergehäuse 10 ein Einspritzmittel 12 für Reduktionsmittel, beispielsweise für eine Harnstoff-Wasser-Lösung angeordnet bzw. befestigt, beispielsweise mit einer Einspritzdüse 14, welche einen Düsenkörper 16 aufweist (**Fig.7B**, **Fig.8**, **Fig.9B**, **Fig.10**). Abströmseitig ist das Überströmkammergehäuse 10 an einem zweiten Gehäuseteil 5 des Gesamtgehäuses 6 z.B. über eine Schelle oder einen Spannring lösbar und insbesondere an einem in dem zweiten Gehäuseteil 5 angeordneten Außenrohr 18 befestigt. Die Mittelachsen des ersten Gehäuseteils 3 und des zweiten Gehäuseteils 5 sind bevorzugt parallel zueinander angeordnet. Das Überströmkammergehäuse 10 bildet dann beispielsweise ein drittes Gehäuseteil des Gesamtgehäuses 6 aus.

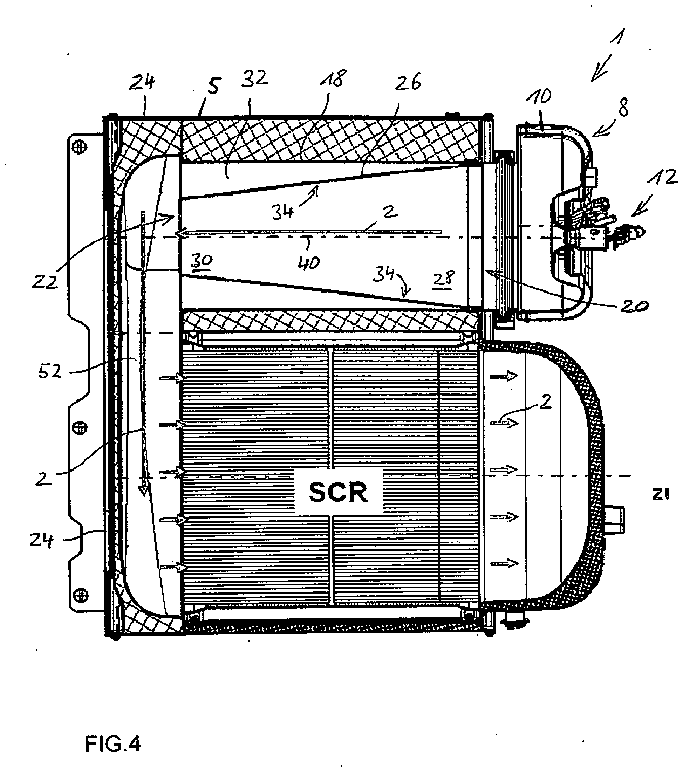

Das zweite Gehäuseteil 5 weist im abströmseitigen Bereich des Überströmkammergehäuses 10 eine Abgaseinlassöffnung 20 auf, in welches der aus dem Überströmkammergehäuse 10 bzw. aus der Überströmkammer 11 austretende Abgasstrom 2 eingeführt wird, sowie eine Abgasauslassöffnung 22, aus welcher der Abgasstrom 2 wieder aus dem zweiten Gehäuseteil 5 beispielsweise in ein weiteres Überströmkammergehäuse 24 mit in ihr eingeschlossener weiterer Überströmkammer 52 ausgeführt wird. Die Abgasauslassöffnung 22 steht dann über das weitere Überströmkammergehäuse 24 als Teil des Gesamtgehäuses 6 mit dem in **Fig.4** sichtbaren Reduktionskatalysator SCR in Strömungsverbindung.

Weiterhin ist ein innerhalb des Außenrohrs 18 angeordnetes, sich in Strömungsrichtung des Abgasstroms 2 beispielsweise kegelförmig verjüngendes Innenrohr 26 vorgesehen, welches an seinem zweiten, einen Einlass bildenden axialen Ende 28 einen größeren Durchmesser aufweist als an seinem zweiten, einen Auslass bildenden axialen Ende 30, wobei das zweite axiale Ende 28 mit der Abgaseinlassöffnung 22 des zweiten Gehäuseteils 5 und das erste axiale Ende 30 mit der Abgasauslassöffnung 22 des zweiten Gehäuseteils 5 in Strömungsverbindung steht.

Weiterhin ist eine radial zwischen dem Innenrohr 26 und dem Außenrohr 18 ausgebildete Kammer 32 vorgesehen, welche mit der Abgasauslassöffnung 22 in Strömungsverbindung steht. Durch das Einspritzmittel 12 wird das Reduktionsmittel in das zweite axiale Ende 28 des Innenrohrs 26 eingespritzt wird. Das Innenrohr 26 weist Durchgangsöffnungen 34 auf, durch welche der in das zweite axiale Ende 28 des Innenrohrs 26 einströmende Abgasstrom 2 hindurch in die Kammer 32 strömt.

Mit anderen Worten ist das Innenrohr 26 perforiert, so dass sich der durch die Abgaseinlassöffnung 20 des zweiten Gehäuseteils 5 und das zweite axiale Ende 28 hindurch in das Innere des Innenrohrs 26 eingeströmte Abgasstrom 2 wenigstens teilweise durch die Durchgangsöffnungen 34 hindurch nach radial außen in die Kammer 32 strömt. Ein weiterer Teil des Abgasstroms 2 passiert indes das Innere des Innenrohrs 26 und tritt über das erste axiale Ende 30 des Innenrohrs 26 aus diesem aus, um sich mit dem Teil des Abgasstroms 2 zu vereinigen, der die in Bezug auf das Innenrohr 26 radial äußere Kammer 32 in axialer Richtung durchströmt hat.

Dadurch wird eine Mischvorrichtung 8 zum Mischen des Abgasstroms mit dem Reduktionsmittel definiert, welche das zweite Gehäuseteil 5 mit der Abgaseinlassöffnung 20 und der Abgasauslassöffnung 22, das Außenrohr 18, das Innenrohr 26, die Kammer 32 und das Einspritzmittel 12 umfasst. Bevorzugt beinhaltet hier ein Gehäuse der Mischvorrichtung 8 das zweite Gehäuseteil 5 und das Überströmkammergehäuse 10, an oder in welchem die Einspritzmittel 12 angeordnet bzw. befestigt sind.

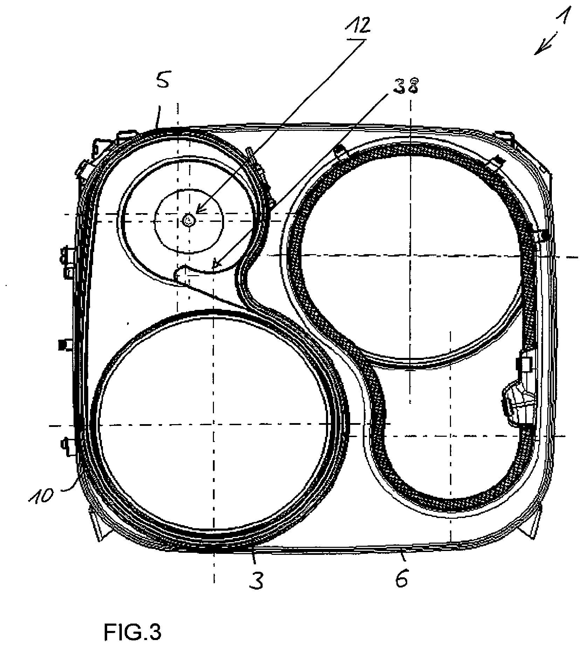

Weiterhin sind zweite Leitmittel an dem Überströmkammergehäuse 10 und insbesondere in der Überströmkammer 11 angeordnet bzw. befestigt (**Fig.3**), welche den Abgasstrom 2 in die Abgaseinlassöffnung 20 des Gehäuses 6 und/oder in das Innenrohr 26 derart einleiten, dass sich im Inneren des Innenrohrs 26 ein spiralförmiger Abgasstrom 2 mit einer Komponente in Axialrichtung und einer Komponente in Umfangsrichtung sowie mit einer Strömungsmittelachse 40 ausbildet. Bei diesem spiralförmig verlaufenden Abgasstrom 2 steigt die in Axialrichtung wirkende Strömungsgeschwindigkeit ausgehend von der Strömungsmittelachse 40 gesehen beispielsweise in radialer Richtung an. Die Strömungsmittelachse dieses im Inneren des Innenrohrs spiralförmig verlaufenden Abgasstroms 2 ist beispielsweise koaxial mit der Mittelachse des Innenrohrs 26.

Das Einspritzmittel 12 ist dabei beispielsweise derart angeordnet, dass das Reduktionsmittel in den spiralförmig verlaufenden Abgasstrom im Inneren des Innenrohrs 26 im Wesentlichen koaxial mit der Strömungsmittelachse 40 des dort spiralförmigen Abgasstroms eingespritzt wird.

Dabei kann das zweite Leitmittel beispielsweise eine Leitschaufel 38 beinhalten, welche sich von einer inneren Wandung des Überströmkammergehäuses 10 in einer den Strömungsquerschnitt durch die Überströmkammer 11 verengenden Weise weg erstreckt. Dabei ist die Leitschaufel 38 senkrecht zu einer gedachten Ebene angeordnet sein, welche senkrecht zu einer Mittelachse des ersten Gehäuseteils 3 und senkrecht zu einer Mittelachse des zweiten Gehäuseteils 5 ist und welche in Bezug zu einer Ebene, welche die Mittelachse des ersten Gehäuseteils 3 und die Mittelachse des zweiten Gehäuseteils 5 enthält, winkelig angeordnet ist.

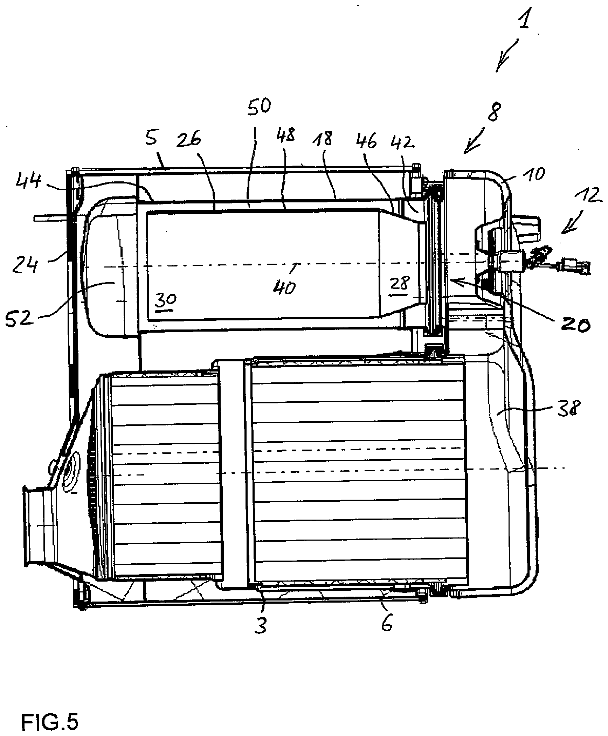

Fig.5 zeigt einen Längsschnitt einer Abgasnachbehandlungsvorrichtung 1 mit einer Mischvorrichtung 8 gemäß einer weiteren bevorzugten Ausführungsform. Wie bei dem Ausführungsbeispiel von **Fig.1** bis **Fig.4** ist auch hier ein im Inneren des zweiten Gehäuseteils 5 aufgenommenes Außenrohr 18 mit einem einlassseitigen Ende 42 und einem auslassseitigen Ende 44 vorgesehen, welches hier beispielsweise glatt zylindrisch ausgeführt ist. Weiterhin ist auch ein innerhalb des Außenrohrs 18 angeordnetes Innenrohr 26 mit einem zweiten, einen Einlass bildenden axialen Ende 28 und einem ersten, einen Auslass bildenden axialen Ende 30 vorgesehen, welches in Strömungsrichtung des Abgases gesehen einen sich von der Abgaseinlassöffnung 20 aus trichter- oder kegelförmigförmig erweiternden Axialabschnitt 46 und einen sich daran anschließenden glattzylindrischen Abschnitt 48 aufweist, Bei dieser Ausführungsform weist das Innenrohr 26 bevorzugt keine Durchgangsöffnungen 34 auf.

Das Einspritzmittel 12 spritzt wiederum Reduktionsmittel in das zweite axiale Ende 28 des Innenrohrs 26, d.h. in den trichterförmigen Axialabschnitt 46 des Innenrohrs 26 ein. Dabei stehen das zweite axiale Ende 28 des Innenrohrs 26 und das einlassseitige Ende 42 des Außenrohrs 18 derart mit der Abgaseinlassöffnung 20 in Strömungsverbindung, dass der in die Abgaseinlassöffnung 20 einströmende Abgasstrom 2 in einen ersten, das Innenrohr 26 durchströmenden Teilabgasstrom und einen zweiten, eine radial zwischen dem Innenrohr 26 und dem Außenrohr 18 angeordnete Ringkammer 50 durchströmenden Teilabgasstrom aufgeteilt wird.

Dann vereinigen sich der erste Teilabgasstrom und der zweite Teilabgasstrom im Bereich des ersten axialen Endes 30 des Innenrohrs 26 und des auslassseitigen Endes 44 des Außenrohrs 18. Die Vereinigung der beiden Teilabgasströme erfolgt bevorzugt in der weiteren Überströmkammer 52 innerhalb des weiteren Überströmkammergehäuses 24.

Mit anderen Worten wird zunächst nur der erste, im Inneren des Innenrohrs 26 strömende Teilabgasstrom mit Reduktionsmittel versetzt. Erst nach Austreten dieses ersten Teilabgasstroms aus dem Innenrohr 26 und nach Vereinigung mit dem zunächst reduktionsmittellosen zweiten Teilabgasstrom gelangt dieser letztere Teilabgasstrom ebenfalls in Kontakt mit dem dann schon zumindest teilweise mit dem ersten Teilabgasstrom durchmischten Reduktionsmittel.

Die Mischvorrichtung 8 gemäß der Ausführung von **Fig.5** umfasst dann das zweite Gehäuseteil 5 mit der Abgaseinlassöffnung 20 und der Abgasauslassöffnung 22, das Außenrohr 18, das Innenrohr 26 und das Einspritzmittel 12. Generell ist auch das zweite Leitmittel hier beispielsweise auch in Form einer Leitschaufel 38 von der Mischvorrichtung 8 beinhaltet.

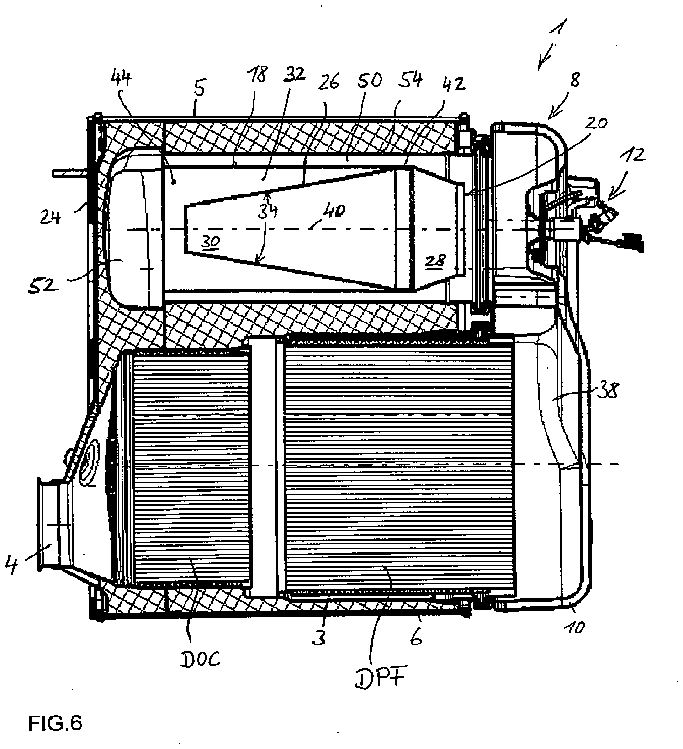

**Fig.6** zeigt einen Längsschnitt der Abgasnachbehandlungsvorrichtung 1 mit einer Mischvorrichtung 8 gemäß einer weiteren bevorzugten Ausführungsform der Erfindung, bei welcher die Ausführungsform gemäß **Fig.1** bis **Fig.4** und die Ausführungsform von **Fig.5** miteinander kombiniert sind, d.h. dass das kegelige, mit Durchgangsöffnungen 34 versehene Innenrohr 26 mit dem Außenrohr 18 kombiniert ist, wobei der erste Teilabgasstrom in das Innenrohr 26 eingeleitet wird und wenigstens teilweise durch die Durchgangsöffnungen 34 hindurch in die Kammer 32 zwischen dem Innenrohr 26 und dem Außenrohr 18 gelangt. In das Innenrohr 26, d.h. in den ersten Teilabgasstrom wird dann das Reduktionsmittel eingespritzt. Der zweite Abgasteilstrom, in welchen kein Reduktionsmittel eingespritzt wird, wird hingegen ausgehend von der Abgaseinlassöffnung des zweiten Gehäuseteils 20 in die Ringkammer 50 zwischen dem Außenrohr 18 und einer radial inneren Gehäusewandung 54 des zweiten Gehäuseteils 6 geleitet und vereinigt sich erst an seinem auslassseitigen Ende 44 mit dem ersten Teilabgasstrom, der an dem auslassseitigen Ende 30 des Innenrohrs 26 aus dem Innenrohr 26 austritt. Die Vereinigung der beiden Teilabgasströme erfolgt bevorzugt wiederum in der weiteren Überströmkammer 52 innerhalb des weiteren Überströmkammergehäuses 24.

Bei allen Ausführungsformen stellen die Überströmkammern 11, 52 und die Überströmkammergehäuse 10, 24 gleichzeitig Umlenkkammern 11, 52 und Umlenkkammergehäuse 10, 24 dar, weil der in sie einströmende Abgasstrom 2 bevorzugt um 90 Grad umgelenkt wird.

Gemäß der bisher beschriebenen Ausführungsformen kann daher in das zweite, den Einlass bildende axiale Ende 28 des Innenrohrs 26 der gesamte in die Abgaseinlassöffnung 20 des zweiten Gehäuseteils 5 eingeführte Abgasstrom 2 oder auch nur ein Teil des gesamten, in die Abgaseinlassöffnung 20 des zweiten Gehäuseteils eingeführten Abgasstroms 2 eingeführt werden.

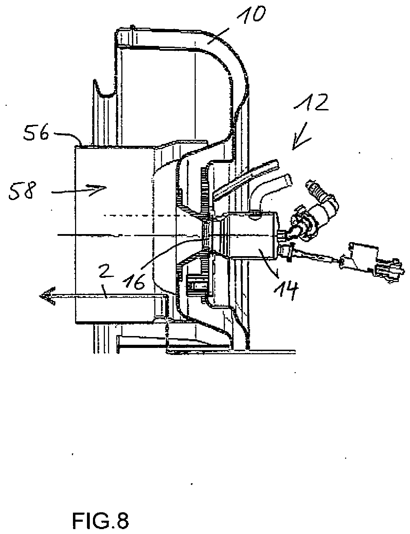

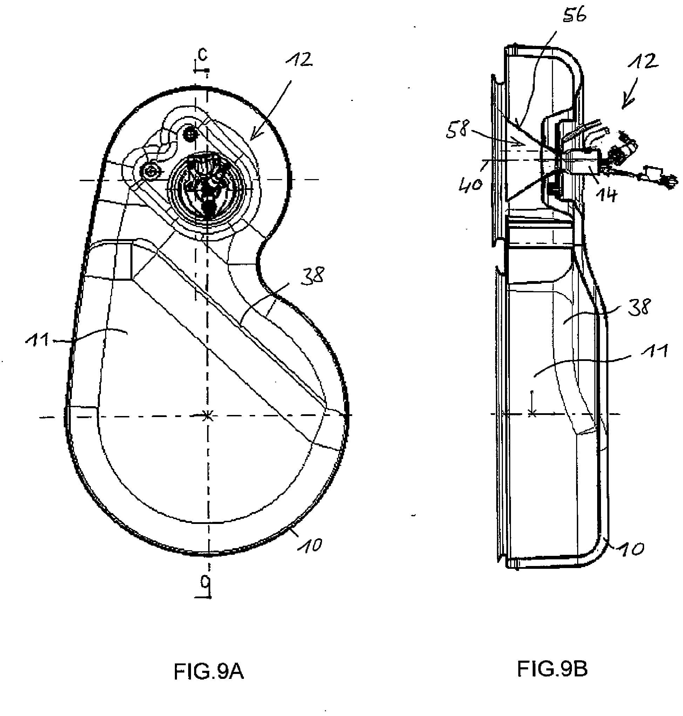

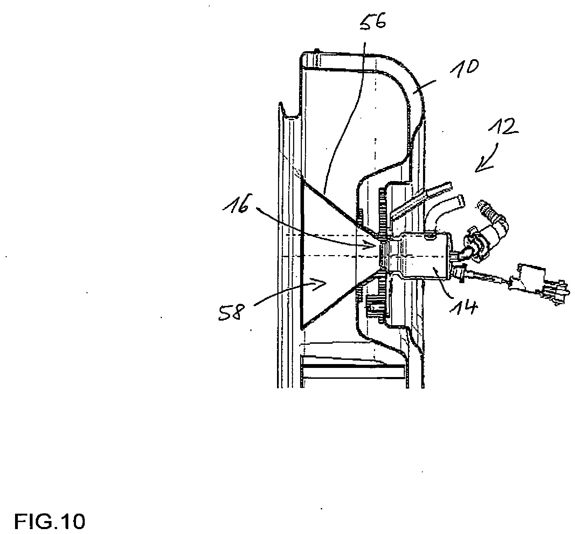

Das Einspritzmittel 12 weist bevorzugt die Einspitzdüse 14 mit dem Düsenkörper 16 auf, durch welche Reduktionsmittel in die Abgaseinlassöffnung 20 des zweiten Gehäuseteils 5 bzw. in das zweite axiale Ende 28 des Innenrohrs 26 eingespritzt wird. Dabei wird, wie **Fig.7A**, **Fig.7B** und **Fig.8** zeigen, der Düsenkörper 16 radial wenigstens teilweise von einem Abschirmkörper 56 umgeben, wobei radial zwischen dem Düsenkörper 16 und dem Abschirmkörper 56 ein Raum 58 ausgebildet ist, in welchen der erste Teilabgasstrom des Abgasstroms 2 eingeströmt wird. Der Abschirmkörper 56 kann dabei bevorzugt durch ein zylindrisches, teilzylindrisches oder kegelförmiges Rohr gebildet werden. **Fig.7A**, **Fig.7B** und **Fig.8** zeigen die zylindrische Ausbildung des Abschirmkörpers 56 und **Fig.9A**, **Fig.9B** und **Fig.10** die Ausbildung des Abschirmkörpers 56 als ein sich von der Einspritzdüse 14 aus gesehen kegelförmig erweiterndes Rohr.

Der Abschirmkörper 56 bewirkt, dass das über die Einspritzdüse 14 eingedüste oder eingespritzte Reduktionsmittel nicht unmittelbar an der Eindüsungs- oder Einspritzstelle von dem Abgasstrom 2 in radialer Richtung abgelenkt wird. Der erste Teilabgasstrom wird daher bevorzugt in axialer Richtung, d.h. parallel zu einer Mittelachse der Einspritzdüse 14 in den Raum 58 eingeführt, wie der Pfeil in **Fig.8** verdeutlicht.

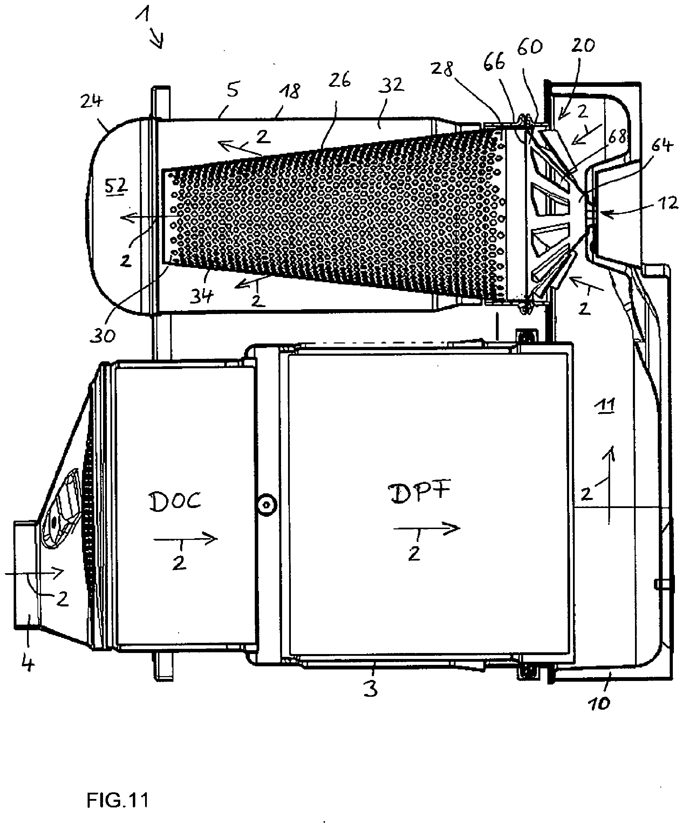

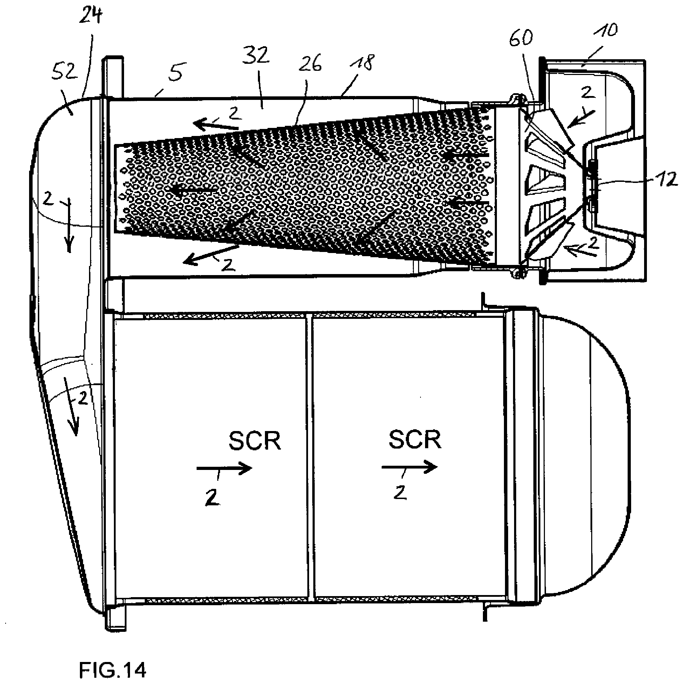

In **Fig.11** bis **Fig.14** ist eine weitere Ausführungsform einer Abgasnachbehandlungsvorrichtung 1 gezeigt, wobei **Fig.11** einen Längsschnitt der Abgasnachbehandlungsvorrichtung entlang der Linie II-II von **Fig.1** analog zu **Fig.2** und **Fig.14** einen Längsschnitt der Abgasnachbehandlungsvorrichtung entlang der Linie IV-IV von **Fig.1** analog zu **Fig.4** zeigt.

Bei dieser und den folgenden Ausführungsformen sind in den Bezug zu den vorangehend beschriebenen Ausführungsformen identische und gleich wirkende Bauteile und Baugruppen mit den gleichen Bezugszahlen bzw. Bezugszeichen bezeichnet.

Zusätzlich in Bezug zu der in **Fig.1** bis **Fig.4** beschriebenen Ausführungsform ist bei der Ausführungsform von **Fig.11** bis **Fig.14** ein hohles, mit dem Innenrohr 26 koaxiales Einströmkegelrohr 60 mit einer im Querschnitt gesehen kegelförmig verlaufenden Wandung 62 vorgesehen sein, von welchem ein erstes offenes Ende 64 einen kleineren Durchmesser aufweist als ein zweites offenes Ende 66. Das Innenrohr 26 weist in seiner Rohrwandung bevorzugt wiederum Durchgangsöffnungen 34 auf.

Die Wandung 62 des Einströmkegelrohrs 60 weist bevorzugt mehrere, über den Umfang verteilt angeordnete Wandungsöffnungen 68 auf, welche einerseits in Bezug zur Wandung 62 außen mit der Abgaseinlassöffnung 20 des zweiten Gehäuseteils 5 und auch mit der Überströmkammer 11 und andererseits in Bezug zur Wandung 62 innen mit dem axialen Querschnitts des zweiten, den Einlass bildenden axialen Endes 28 des Innenrohrs 26 derart verbunden sind, dass durch die Wandungsöffnungen 68 hindurch hier beispielsweise der gesamte in die Abgaseinlassöffnung 20 des zweites Gehäuseteils 5 bzw. in die Überströmkammer 11 eingeführte Abgasstrom 2 in das Innere des Einströmkegelrohrs 60 geführt wird.

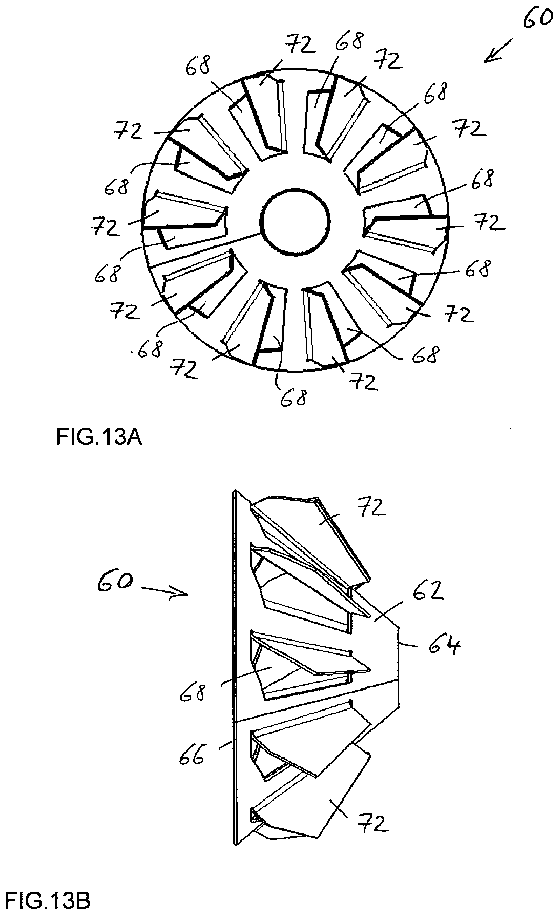

Die Wandungsöffnungen 68 sind hier bevorzugt rechteckförmig ausgebildet, wobei eine entlang der Längsseite verlaufende Mittelachse einer rechteckförmigen Wandungsöffnung 68 beispielsweise bezogen auf die Wandung 62 radial verläuft, wie anhand von **Fig.13B** leicht vorstellbar ist. Anstatt rechteckförmig können die Wandungsöffnungen 68 einen beliebigen Querschnitt aufweisen und beispielsweise auch quadratisch, polygonförmig, dreieckförmig oder auch rund sein. Denkbar sind auch Mischungen verschiedener Formen.

Das zweite offene Ende 66 des Einströmkegelrohrs 60 ist mit dem zweiten, den Einlass bildenden axialen offenen Ende 28 des Innenrohrs 26 unmittelbar beispielsweise koaxial verbunden und steht mit diesem derart strömungsleitend in Verbindung, dass der gesamte in das Innere des Einströmkegelrohrs 60 geführte Abgasstrom 2 in das zweite, den Einlass bildende axiale offene Ende 28 des Innenrohrs 26 eingeführt wird.

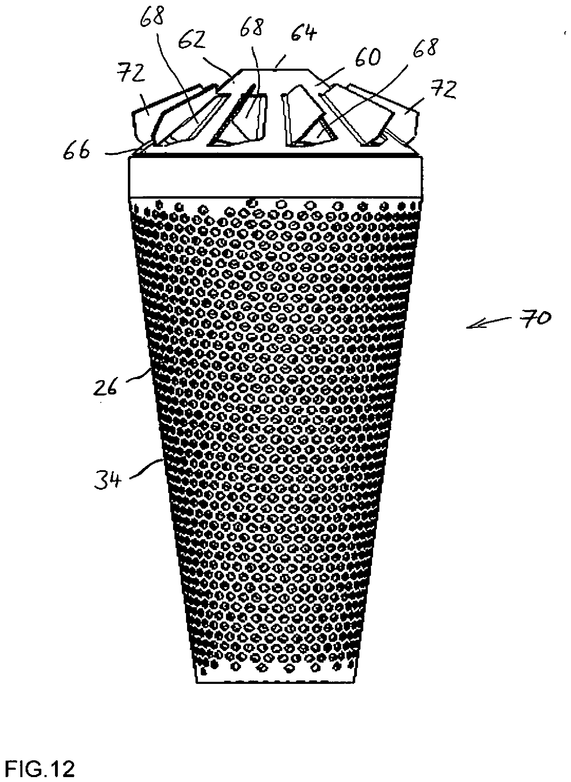

Wie insbesondere aus **Fig.12** hervorgeht, sind das Einströmkegelrohr 60 und das Innenrohr bevorzugt zu einer beispielsweise unlösbaren Baueinheit 70, beispielsweise durch Verschweißen zusammengefasst und koaxial zueinander angeordnet. Dabei kann insbesondere das zweite, den Einlass bildende axiale offene Ende 28 des Innenrohrs 26 den gleichen Durchmesser in Bezug zu dem zweiten Ende 66 des Einströmkegelrohrs 60 aufweisen und mit diesem direkt und koaxial verbunden sein.

Das Einspritzmittel 12 ist dann beispielsweise in dem ersten Ende 64 des Einströmkegelrohrs 60 beispielsweise koaxial gehalten und spritzt Reduktionsmittel in das Innere des Einströmkegelrohrs 60 ein.

Das Einströmkegelrohr 60 ist als Einzelteil in **Fig.13a** bis **Fig.13c** dargestellt. Beispielsweise kann im Bereich der hier beispielsweise rechteckförmigen Wandungsöffnungen 68 des Einströmkegelrohrs 60 beispielsweise je Wandungsöffnung 68 eine eigene Leitschaufel 72 derart angeordnet sein, dass sich beim Anströmen der Leitschaufeln 72 und Durchströmen der Wandungsöffnungen 68 im Inneren des Einströmkegelrohrs 60 ein spiralförmig verlaufender Abgasstrom 2 mit einer Komponente in Axialrichtung und einer Komponente in Umfangsrichtung ausbildet.

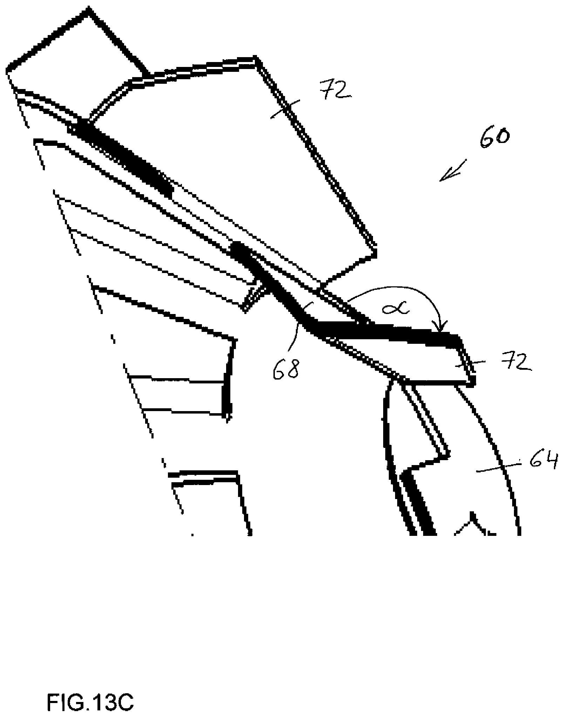

Die Leitschaufeln 72 sind in Bezug zur Wandung 62 des Einströmkegelrohrs 60 winkelig und in einem Winkel α angeordnet, wie am besten in **Fig.13C** zu sehen ist. Hier weisen die Leitschaufeln 72 in Bezug zur Wandung 62 beispielsweise nach außen d.h. in Anströmrichtung. Alternativ könnten die Leitschaufeln 72 auch in Bezug zur Wandung 62 nach innen, d.h. in Bezug zur Wandung 62 in Abströmrichtung weisen.

In Bezug auf die Fertigung der Leitschaufeln 72 kann besonders vorteilhaft sein, wenn die Leitschaufeln 72 einstückig mit der Wandung 62 des Einströmkegelrohrs 60 ausgeführt sind und in einem Verbindungsbereich mit der Wandung 62 in Bezug zur Wandung 62 dann in dem gewünschten Winkel α nach außen oder nach innen abgebogen werden, wodurch dann auch die Wandungsöffnungen 68 ausgebildet werden. Dies ist auch in **Fig.13B** gut zu erkennen. Durch die Einspritzdüse 14 des Einspritzmittels 12, welches bevorzugt in einer Öffnung des ersten Endes 64 des Einströmkegelrohres 64 gehalten bzw. befestigt ist, wird dann Reduktionsmittel insbesondere in Form eines Spraykegels in den infolge der Leitschaufeln 72 im Inneren des Einströmkegelrohrs 60 spiralförmig verlaufenden Abgasstrom 2 axial eingespritzt. Unter einer axialen Einspritzung ist zu verstehen, dass eine Mittelachse eines sich durch die Einspritzung mittels der Einspritzdüse 14 ergebenden Spraykegels eine axiale oder koaxiale Ausrichtung in Bezug zu einer Strömungsmittelachse des im Inneren des Einströmkegelrohrs 60 spiralförmig verlaufenden Abgasstroms 2 aufweist.

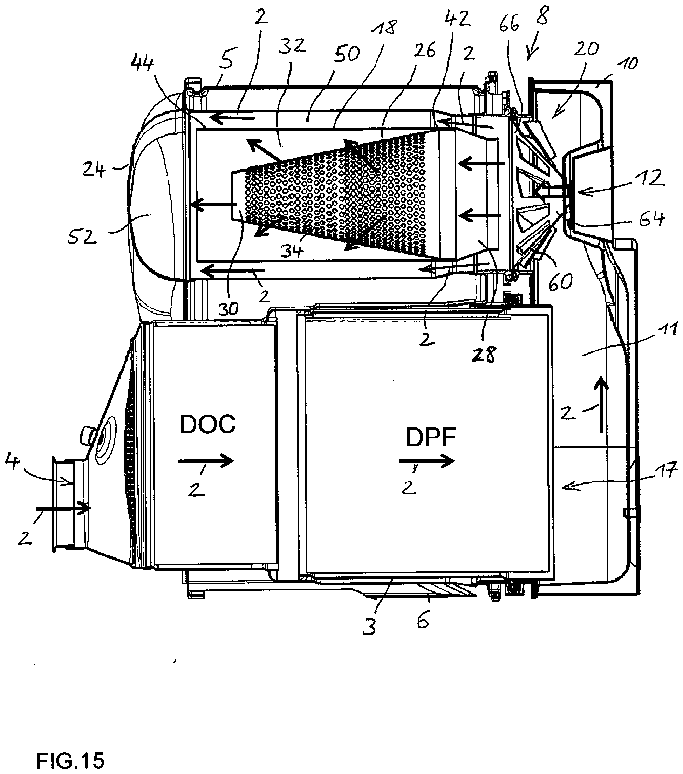

Die Ausführungsform von **Fig.15** unterscheidet sich von der Ausführungsform von **Fig.6** darin, dass an oder in der Abgaseinlassöffnung 20 des zweiten Gehäuseteils 5 ein Einströmkegelrohr 60 wie oben beschrieben angeordnet ist, welcher dann beispielsweise mit dem zweiten Gehäuseteil 5 lösbar verbunden ist. Das zweite Ende 66 des Einströmkegelrohrs 60 ist dann beispielsweise an dem zweiten Gehäuseteil 5 lösbar festgelegt, wobei weiterhin das Einspritzmittel 12 beispielsweise in dem ersten Ende 64 des Einströmkegelrohrs 60 aufgenommen ist. Das Einströmkegelrohr 60 wird hier beispielsweise von dem von dem gesamten Abgasstrom 2 durchströmt und damit auch der gesamte Abgasstrom 2 in Drall versetzt. Das zweite axiale Ende 28 des Innenrohrs 26 sowie auch das einlassseitige Ende 42 des Außenrohrs 18 sind dabei axial ein Stück weit von dem zweiten auslassseitigen Ende 66 des Einströmkegelrohrs 60 beabstandet, so dass der in das Innere des Einströmkegelrohrs 60 eingeströmte und hier beispielsweise gesamte Abgasstrom 2 sowohl in das Innenrohr 26 als auch in die Ringkammer 50 einströmen und sich dadurch in zwei Teilabgasströme wie zur Ausführungsform zu **Fig.6** beschrieben aufteilen kann. Dann werden beide Teilabgasströme, ein erster Teilabgasstrom und ein zweiter Teilabgasstrom jeweils mit Reduktionsmittel vermischt, weil das Reduktionsmittel in das Innere des Einströmkegelrohrs 60 eingespritzt wurde und sich der gesamte Abgasstrom erst danach, d.h. in Strömungsrichtung gesehen hinter dem zweiten Ende 66 des Einströmkegelrohrs 60 in die beiden Teilabgasströme aufteilt. Der mit dem Reduktionsmittel vermischte erste Teilabgasstrom 2 passiert dann teilweise die Durchgangsöffnungen 34 des Innenrohrs 26, um in die Kammer 32 zu gelangen, ein Rest strömt durch das Innere des Innenrohrs 26 vollständig hindurch. Der mit Reduktionsmittel vermischte zweite Teilabgasstrom, welcher einen Bypass-Teilabgasstrom darstellt, passiert hingegen die Ringkammer 50, um sich hinter dem auslassseitigen Ende 44 des Außenrohrs 18 mit dem ersten Teilabgasstrom wieder zu vereinigen.

Gemäß einer hier nicht dargestellten Ausführungsform kann das Innenrohr 26 eingangsseitig, d.h. an seinem zweiten axialen Ende 28 aber auch mit einem Einströmkegelrohr 60 wie oben beschrieben strömungsdicht verbunden sein, um die Baueinheit 70 gemäß **Fig.12** auszubilden. Der der Abgaseinlassöffnung 20 des zweiten Gehäuseteils 5 zuströmende Abgasstrom 2 teilt sich dann wiederum in einen ersten Abgasteilstrom, der über die Leitschaufeln 72 und die Wandungsöffnungen 68 des Einströmkegelrohrs 60 in das Innere des Einströmkegelrohrs 60 einströmt, dort dann spiralförmig verläuft und in den Reduktionsmittel durch das Einspritzmittel 12 eingespritzt wird sowie in einen zweiten Teilabgasstrom, welcher einen Bypass-Teilabgasstrom und einen in Bezug zum ersten Teilabgasstrom getrennten zweiten Teilabgasstrom darstellt, in welchen kein Reduktionsmittel eingespritzt wird. Der zweite Teilabgasstrom wird beispielsweise radial außen an dem Rand des Einströmkegelrohrs 60 vorbeigeführt. Der mit dem Reduktionsmittel vermischte erste Teilabgasstrom 2 passiert dann teilweise die Durchgangsöffnungen 34 des unmittelbar an das Einströmkegelrohr 60 angeschlossenen Innenrohrs 26, um in die Kammer 32 zu gelangen. Die Modifikationen in Bezug zur Ausführungsform von **Fig.6** betreffen bei dieser nicht dargestellten Ausführungsform daher lediglich den ersten, das Innenrohr 26 passierenden Teilabgasstrom. Der zweite Teilabgasstrom verläuft daher wiederum wie bei der Ausführungsform von **Fig.6** als Bypass-Teilabgasstrom parallel zum ersten Teilabgasstrom in der äußeren Ringkammer 50 radial außen am Außenrohr 18 entlang und wird insbesondere nicht mit Reduktionsmittel vermischt. Eine Vereinigung der beiden Teilabgasströme findet dann wiederum wie bei der Ausführungsform von **Fig.6** hinter dem auslassseitigen Ende 44 des Außenrohrs 18 statt.

Den Ausführungsformen von **Fig.1** bis **Fig.4**, **Fig.6****,** **Fig.11** bis **Fig.14** und **Fig.15** ist gemeinsam, dass das zweite axiale Ende 28 des Innenrohrs 26 in dem einlassseitigen Ende 42 des Außenrohrs 18 gehalten bzw. befestigt ist, ohne dass dazwischen, d.h. radial noch ein Ringspalt vorhanden ist. Mit anderen Worten ist die zwischen dem Innenrohr 26 und dem Außenrohr 18 ausgebildete Kammer 32 lediglich zu ihrem ersten Ende hin offen, der zum ersten axialen Ende 30 des Innenrohrs 26 hin weist, während sie an ihrem zweiten, zum zweiten axialen Ende 28 des Innenrohrs 26 weisenden Ende verschlossen ist.

### Bezugszeichenliste

- 1: Abgasnachbehandlungsvorrichtung
- 2: Abgasstrom
- 3: erstes Gehäuseteil
- 4: Zuströmöffnung
- 5: zweites Gehäuseteil
- 6: Gesamtgehäuse
- 8: Mischvorrichtung
- 10: Überströmkammergehäuse
- 11: Überströmkammer
- 12: Einspritzmittel
- 14: Einspritzdüse
- 16: Düsenkörper
- 17: Abgasauslassöffnung
- 18: Außenrohr
- 20: Abgaseinlassöffnung
- 22: Abgasauslassöffnung
- 24: weiteres Überströmkammergehäuse
- 26: Innenrohr
- 28: zweites axiales Ende
- 30: erstes axiales Ende
- 32: Kammer
- 34: Durchgangsöffnungen
- 38: zweites Leitmittel
- 40: Strömungsmittelachse
- 42: einlassseitiges Ende
- 44: auslassseitiges Ende
- 46: trichterförmiger Axialabschnitt
- 48: glattzylindrischer Axialabschnitt
- 50: Ringkammer
- 52: weitere Überströmkammer
- 54: Gehäusewandung
- 56: Abschirmkörper
- 58: Raum
- 60: Einströmkegelrohr
- 62: Wandung
- 64: erstes Ende
- 66: zweites Ende
- 68: Wandungsöffnungen
- 70: Baueinheit
- 72: Leitschaufel

- DOC: Oxidationskatalysator
- DPF: Partikelfilter
- SCR: Reduktionskatalysator

## Patentansprüche

1. Abgasnachbehandlungsvorrichtung (1) beinhaltend wenigstens einen SCR-Katalysator (SCR), welchem in Strömungsrichtung eines Abgasstroms (2) einer Brennkraftmaschine gesehen wenigstens eine Mischvorrichtung (8) vorgeordnet ist, durch welche Reduktionsmittel in den Abgasstrom (2) eingebracht wird, wobei die Mischvorrichtung (8) wenigstens Folgendes umfasst:
a) ein Gehäuse (5) mit einer Abgaseinlassöffnung (20), in welches der Abgasstrom (2) eingeführt wird und mit einer Abgasauslassöffnung (22), aus welchem der Abgasstrom (2) ausgeführt wird,
b) ein im Inneren des Gehäuses (5) mit wenigstens einem Teil aufgenommenes und/oder mit wenigstens einem Teil wenigstens einen Teil des Gehäuses (5) bildendes Außenrohr (18),
c) ein innerhalb des Außenrohrs (18) angeordnetes, mehrere Durchgangsöffnungen (34) in seiner Rohrwandung aufweisendes Innenrohr (26) mit einem ersten, einen Auslass bildenden axialen Ende (30), welches mit der Abgasauslassöffnung (22) in Strömungsverbindung steht,
d) eine radial zwischen dem Innenrohr (26) und dem Außenrohr (18) ausgebildete Kammer (32), welche mit der Abgasauslassöffnung (22) in Strömungsverbindung steht,
e) ein Einspritzmittel (12), durch welches Reduktionsmittel in ein zweites axiales Ende (28) des Innenrohrs (26) gelangt, wobei
f) in eine offene Querschnittsfläche eines zweiten, einen Einlass bildenden axialen Endes (28) des Innenrohrs (26) der gesamte in die Abgaseinlassöffnung (20) eingeführte Abgasstrom (2) oder nur ein Teil davon im Wesentlichen axial eingeführt wird, wobei ein Teil des eingeführten Abgasstroms entlang des Innenrohrs (26) in Axialrichtung durch das Innere des Innenrohrs (26) strömt, und dass
g) durch die Durchgangsöffnungen (34) des Innenrohrs (26) hindurch wenigstens ein Teil des über die offene Querschnittsfläche des zweiten axialen Endes (28) in das Innere des Innenrohrs (26) eingeströmten Abgasstroms (2) nach radial außen in die Kammer (32) strömt, **dadurch gekennzeichnet, dass**
h) ein hohles mit dem Innenrohr (26) koaxiales Einströmkegelrohr (60) mit einer im Querschnitt gesehen kegelförmig verlaufenden Wandung (62) vorgesehen ist, von welchem ein erstes Ende (64) einen kleineren Durchmesser aufweist als ein zweites Ende (66), wobei
i) die Wandung (62) des Einströmkegelrohrs (60) wenigstens eine Wandungsöffnung (68) aufweist, welche in Bezug zur Wandung (62) außen mit der Abgaseinlassöffnung (20) des Gehäuses (5) und in Bezug zur Wandung (62) innen mit zweiten, den Einlass bildenden axialen Ende (28) des Innenrohrs (26) derart strömungsleitend verbunden ist, dass durch die wenigstens eine Wandungsöffnung (68) hindurch der gesamte in die Abgaseinlassöffnung (20) des Gehäuses (5) eingeführte Abgasstrom (2) oder nur ein Teil davon in das Innere des Einströmkegelrohrs (60) geführt wird, und wobei
j) das zweite Ende (66) des Einströmkegelrohrs (60) mit dem zweiten, den Einlass bildenden axialen Ende (28) des Innenrohrs (26) derart strömungsleitend in Verbindung steht, dass der gesamte in das Innere des Einströmkegelrohrs (60) geführte Abgasstrom (2) in das zweite, den Einlass bildende axiale Ende (28) des Innenrohrs (26) eingeführt wird, und wobei
k) das Einspritzmittel (12) angeordnet ist, dass es Reduktionsmittel in das Innere des Einströmkegelrohrs (60) einspritzt.

2. Abgasnachbehandlungsvorrichtung nach Anspruch 1, **dadurch gekennzeichnet, dass** sie ausgebildet ist, dass der in die Kammer (32) geströmte Teil des Abgasstroms (2) sich mit dem im Inneren des Innenrohrs (26) strömenden Teil des Abgasstroms (2) in Strömungsrichtung hinter dem Innenrohr (26) vereinigt.

3. Abgasnachbehandlungsvorrichtung nach Anspruch 1 oder 2, **dadurch gekennzeichnet, dass** sich das Innenrohr (26) in Strömungsrichtung des Abgasstroms (2) gesehen kegelförmig verjüngt, wobei das Innenrohr (26) an seinem zweiten, den Einlass bildenden axialen Ende (28) einen größeren Durchmesser aufweist als an seinem ersten, den Auslass bildenden axialen Ende (30).

4. Abgasnachbehandlungsvorrichtung nach einem der vorhergehenden Ansprüche, **dadurch gekennzeichnet, dass** das erste, den Auslass bildende axiale Ende (30) des Innenrohrs (26) einen Deckel mit Durchgangsöffnungen aufweist oder ohne Deckel offen ausgeführt ist.

5. Abgasnachbehandlungsvorrichtung nach einem der vorhergehenden Ansprüche, **dadurch gekennzeichnet, dass** in das zweite, den Einlass bildende axiale Ende (28) des Innenrohrs (26) der gesamte in die Abgaseinlassöffnung (20) des Gehäuses (5) eingeführte Abgasstrom (2) oder nur ein Teil des gesamten, in die Abgaseinlassöffnung (20) des Gehäuses (5) eingeführten Abgasstroms (2) eingeführt wird.

6. Abgasnachbehandlungsvorrichtung nach einem der vorhergehenden Ansprüche, **dadurch gekennzeichnet, dass** im Bereich der wenigstens einen Wandungsöffnung (68) des Einströmkegelrohrs (60) ein erstes Leitmittel derart angeordnet ist, dass bei Anströmung des Einströmkegelrohrs (60) von außen und vom ersten Ende (64) her und bei einem Durchströmen der wenigstens einen Durchgangsöffnung (68) sich im Inneren des Einströmkegelrohrs (60) ein spiralförmig verlaufender Abgasstrom (2) mit einer Komponente in Axialrichtung und einer Komponente in Umfangsrichtung ausbildet.

7. Abgasnachbehandlungsvorrichtung nach Anspruch 6, **dadurch gekennzeichnet, dass** das erste Leitmittel wenigstens eine Leitschaufel (72) umfasst, welche in Bezug zur Wandung (60) des Einströmkegelrohrs (60) winkelig angeordnet ist und in Bezug zur Wandung (60) nach außen oder nach innen weist.

8. Abgasnachbehandlungsvorrichtung nach Anspruch 7, **dadurch gekennzeichnet, dass** die wenigstens eine Leitschaufel (72) einstückig mit der Wandung (62) des Einströmkegelrohrs (60) ausgeführt und in einem Verbindungsbereich mit der Wandung (62) in Bezug zur Wandung (62) nach außen oder nach innen abgebogen ist, wodurch die wenigstens eine Wandungsöffnung (68) ausgebildet wird.

9. Abgasnachbehandlungsvorrichtung nach einem der vorhergehenden Ansprüche, **dadurch gekennzeichnet, dass** das Einspritzmittel (12) wenigstens eine Einspritzdüse (14) aufweist und in oder an dem ersten Ende (64) des Einströmkegelrohrs (60) koaxial gehalten ist.

10. Abgasnachbehandlungsvorrichtung nach einem der Ansprüche 6 bis 9, **dadurch gekennzeichnet, dass** das Einspritzmittel (12) in Bezug zu dem Einströmkegelrohr (60) derart angeordnet ist, dass Reduktionsmittel zentral und koaxial in den spiralförmig verlaufenden Abgasstrom (2) im Inneren des Einströmkegelrohrs (60) eingespritzt wird.

## Claims

1. An exhaust gas treatment device (1), comprising:
at least one SCR catalytic converter (SCR) wherein at least one mixing device (8) is arranged upstream of the SCR in an exhaust gas flow (2) of an internal combustion engine, wherein the mixing device introduces reduction agents into the exhaust gas flow (2), the mixing device (8) including:
a) a housing (5) including an exhaust gas inlet opening (20), wherein the exhaust gas flow (2) is introduced into the housing through the exhaust gas inlet opening, and an exhaust gas outlet opening (22), wherein the exhaust gas flow (2) is exhausted from the housing through the exhaust outlet opening,
b) an outer tube (18) that is at least partially received in the housing (5) and/or that forms a portion of the housing (5) with at least a portion of the outer tube,
c) an inner tube (26) that is arranged within the outer tube (18) and includes plural pass-through openings (34) in a tube wall of the inner tube and a first axial end (30) that forms an outlet and that is flow connected with the outlet opening (22),
d) a chamber (32) that is arranged radially between the inner tube (26) and the outer tube (18) and that is flow connected with the exhaust gas outlet opening (22),
e) an injection device (12) wherein the reduction agent is introduced into a second axial end (28) of the inner tube (26) through the injection device,
f) wherein an entirety of the exhaust gas flow (2) that is introduced into the exhaust inlet opening (20) or only a portion thereof is essentially axially introduced into an open cross sectional surface of a second axial end (28) of the inner tube (26) that forms an inlet, wherein a portion of the introduced exhaust gas flow flows along the inner tube (26) in an axial direction through an interior of the inner tube (26), and
g) wherein at least a portion of the exhaust gas flow (2) that flows through the open cross sectional surfaces of the second axial end (28) into the interior of the inner tube (26) flows through the pass-through openings (34) of the inner tube (26) in a radially outward direction into the cavity (32), **characterized in that**
h) a hollow conical inflow tube (60) is provided coaxial with the inner tube (26) and includes a wall (62) that has a conical cross section, wherein a first end (64) of the conical inflow tube (60) has a smaller diameter than a second end (66), wherein
i) the wall (62) of the conical inflow tube (60) includes at least one wall opening (68) which is flow connected relative to the wall (62) on an outside with the exhaust gas inlet opening (20) of the housing (5) and flow connected relative to the wall (62) on the inside with the second axial end (28) of the inner tube (26) that forms the inlet so that the entirety of the exhaust gas flow (2) that is introduced into the exhaust gas inlet opening (20) of the housing (5) or only a portion thereof is run into an interior of the conical inflow tube (60) through the at least one wall opening (68), and wherein
j) the second end (66) of the conical inflow tube (60) is flow connected with the second axial end (28) of the inner tube (26) that forms the inlet, so that the entire exhaust gas flow (2) that is run into the interior of the conical inflow tube (60) is introduced into the second axial end (28) of the inner tube (26) that forms the inlet, and wherein
k) the injection device (12) is arranged so that it injects the reduction agent into the interior of the conical inflow tube (60).

2. The exhaust gas treatment device according to claim 1, **characterized in that** it is configured to join the portion of exhaust gas flow (2) that has flowed into the chamber (32) with the portion of the exhaust gas flow (2) that flows in an interior of the inner tube (26), wherein the joining is performed downstream of the inner tube (26).

3. The exhaust gas treatment device according to claim 1 or 2 **characterized in that** the inner tube (26) tapers in a cone shape in the flow direction of the exhaust gas flow (2), wherein the inner tube (26) has a larger diameter at a second axial end (28) that forms the inlet, than at the first axial end (30) that forms the outlet.

4. The exhaust gas treatment device according to one of the preceding claims, **characterized in that** the first axial end (30) of the inner tube (26) that forms the outlet includes a cover with pass-through openings or is configured open without cover.

5. The exhaust gas treatment device according to one of the preceding claims, **characterized in that** an entirety of the exhaust gas flow (2) that is introduced into the exhaust gas inlet opening (20) of the housing (5) or only a portion of the entire exhaust gas flow (2) that is introduced into the exhaust inlet opening (20) of the housing (5) is introduced into the second axial end (28) of the inner tube (26) that forms the inlet.

6. The exhaust treatment device according to one of the preceding claims, **characterized in that** a first a guide device is arranged in a portion of the at least one wall opening (68) of the conical inflow tube (60) so that a helical exhaust gas flow (2) with an axial component and a circumferential component is formed in the interior of the conical inflow tube (60) when the conical inflow tube (60) is flowed from an outside and from the first end (64) and when the at least one pass-through opening (68) is flowed through.

7. The exhaust treatment device according to claim 6, **characterized in that** the first guide device includes at least one guide vane (72) that is arranged at an angle relative to the wall (60) of the conical inflow tube and that is oriented outward or inward with reference to the wall (60).

8. The exhaust gas treatment device according to claim 7 is **characterized in that** the guide vane (72) is provided integral in one piece with the wall (62) of the conical inflow tube (60) and the guide vane (72) is curved outward or inward relative to the wall (62) in a connection portion with the wall (62) so that the at least one wall opening (68) is formed.

9. The exhaust gas treatment device according to one of the preceding claims, **characterized in that** the injection device (12) includes at least one injection nozzle (14) and is coaxially supported in or at the first end (64) of the conical inflow tube (60).

10. The exhaust gas treatment device according to one of the claims 6-9, **characterized in that** the injection device (12) is arranged relative to the conical inflow tube (60) so that the reduction agent is centrally and coaxially injected into the helical exhaust gas flow (2) in the interior of the conical inflow tube (60).

## Revendications

1. Dispositif de post-traitement des gaz d'échappement (1) qui contient au moins un catalyseur SCR (SCR) par rapport auquel au moins un dispositif de mélange (8) est placé en amont, ceci étant vu dans le sens d'écoulement d'un flux de gaz d'échappement (2) d'un moteur à combustion interne, dispositif par lequel des agents réducteurs sont amenés dans le flux de gaz d'échappement (2), cependant que le dispositif de mélange (8) comprend au moins les éléments suivants :
a) un bâti (5) avec un orifice d'admission des gaz d'échappement (20) dans lequel le flux de gaz d'échappement (2) est introduit et avec un orifice de sortie des gaz d'échappement (22) par lequel le flux de gaz d'échappement (2) est évacué,
b) un tuyau extérieur (18) logé avec au moins une partie dans l'intérieur du bâtiment (5) et/ou avec au moins une partie qui forme au moins une partie du bâtiment (5),
c) un tuyau intérieur (26) placé à l'intérieur du tuyau extérieur (18), qui présente plusieurs orifices de passage (34) dans sa paroi intérieure, avec une première extrémité axiale qui forme une sortie qui est en relation d'écoulement avec l'orifice de sortie des gaz d'échappement (22),
d) une chambre formée entrée le tuyau intérieur (26) et le tuyau extérieur (18) qui est en relation d'écoulement avec l'orifice de sortie des gaz d'échappement (22),
e) un moyen d'injection (12) par lequel un agent réducteur arrive dans une seconde extrémité axiale (28), cependant
f) que l'ensemble du flux de gaz d'échappement introduit dans l'orifice d'admission des gaz d'échappement (20) ou seulement une partie de celui-ci est introduite substantiellement dans le sens axial dans une surface transversale ouverte d'une seconde extrémité axiale (28) du tuyau intérieur (26) qui forme une entrée, cependant qu'une partie du flux d'écoulement introduit s'écoule le long du tuyau intérieur (26) dans le sens axial à travers l'intérieur du tuyau intérieur (26) et que
g) au moins une partie du flux de gaz d'échappement (2) qui a afflué dans l'intérieur du tuyau intérieur (26) traverse les orifices de passage (34) du tuyau intérieur (26) par la surface transversale ouverte de la seconde extrémité axiale (28) et s'écoule dans le sens radial vers l'extérieur dans la chambre (32), **caractérisé en ce**
h) **qu'**un tuyau conique creux d'entrée (60), coaxial avec le tuyau intérieur (26), est prévu avec une paroi de forme conique, ceci étant vu en section transversale), tuyau dont une première extrémité (64) présente un plus petit diamètre qu'une seconde extrémité (66), cependant que
i) la paroi (62) du tuyau conique d'entrée (60) présente au moins un orifice de paroi (68) qui est relié de manière à guider l'écoulement par rapport à la paroi (62) à l'extérieur avec l'orifice d'admission des gaz d'échappement (20) du bâti (5) et par rapport à la paroi (62) à l'intérieur avec la seconde extrémité axiale (28) du tuyau intérieur (26) qui forme l'entrée de telle manière que l'ensemble du flux de gaz d'échappement (2) introduit dans l'orifice d'admission des gaz d'échappement (20) du boîtier (5) ou seulement une partie de celui-ci est guidée et traverse le au moins un orifice de paroi (68) et cependant que
j) la seconde extrémité (66) du tuyau conique d'entrée (60) est en relation avec la seconde extrémité axiale (28) du tuyau intérieur (26) qui forme l'entrée de manière à guider l'écoulement de telle manière que l'ensemble du flux de gaz d'échappement (2) introduit dans l'intérieur du tuyau d'entrée conique (60) est introduit dans la seconde extrémité axiale (28) du tuyau intérieur (26) qui forme l'entrée, cependant que
k) le moyen d'injection (12) est placé de telle manière qu'il injecter un agent réducteur dans l'intérieur du tuyau d'entrée conique (60).

2. Dispositif de post-traitement des gaz d'échappement selon la revendication 1, **caractérisé en ce qu'**il est configuré pour que la partie du flux de gaz d'échappement (2) affluée dans la chambre (32) se joint à la partie du flux de gaz d'échappement (2) affluée dans l'intérieur du tuyau intérieur (26) dans le sens d'écoulement derrière le tuyau intérieur (26).

3. Dispositif de post-traitement des gaz d'échappement selon la revendication 1 ou 2, **caractérisé en ce que** le tuyau intérieur (26) s'effile de manière conique, ceci étant vu dans le sens d'écoulement d'un flux de gaz d'échappement (2), cependant que le tuyau intérieur (26) présente un plus grand diamètre à sa seconde extrémité axiale (28) du tuyau intérieur (26) qui forme l'entrée qu'à sa première extrémité axiale (30) qui forme la sortie.

4. Dispositif de post-traitement des gaz d'échappement selon l'une des revendications précédentes, **caractérisé en ce que** la première extrémité axiale (30) qui forme la sortie du tuyau intérieur (26) présente un couvercle avec des orifices de passage ou est réalisée ouverte sans couvercle.

5. Dispositif de post-traitement des gaz d'échappement selon l'une des revendications précédentes, **caractérisé en ce que** l'ensemble du flux de gaz d'échappement (2) introduit dans l'orifice d'admission des gaz d'échappement (20) du boîtier (5) est introduit dans la seconde extrémité axiale (28) du tuyau intérieur (26) qui forme l'entrée ou seulement une partie de l'ensemble du flux de gaz d'échappement (2) introduit dans l'orifice d'admission des gaz d'échappement (20) du boîtier (5).

6. Dispositif de post-traitement des gaz d'échappement selon l'une des revendications précédentes, **caractérisé en ce qu'**un premier moyen de guidage est placé dans la zone du au moins un orifice de paroi (68) du tuyau d'entrée conique (60) de telle manière que, lorsqu'il y a un écoulement du tuyau d'entrée conique (60) à partir de l'extérieur et de la première extrémité (64) et lorsque le au moins un orifice de passage (68) est traversé, un flux de gaz de gaz d'échappement (2) de forme spiralée se forme dans l'intérieur du tuyau d'entrée conique (60) avec une composante dans le sens axial et une composante dans le sens circonférentiel.

7. Dispositif de post-traitement des gaz d'échappement selon la revendication 6, **caractérisé en ce que** le premier moyen de guidage comprend au moins une aube directrice (72) qui est placée en formant un angle par rapport à la paroi (60) du tuyau d'entrée conique (60) et qui est tournée vers l'extérieur ou vers l'intérieur par rapport à la paroi (60).

8. Dispositif de post-traitement des gaz d'échappement selon la revendication 7, **caractérisé en ce que** la au moins une aube directrice (72) est réalisée en une pièce avec la paroi (62) du tuyau d'entrée conique (60) et est recourbée vers l'extérieur ou vers l'intérieur par rapport à la paroi (62) dans une zone de jonction avec la paroi (62) si bien que le au moins un orifice de paroi (68) est formé.

9. Dispositif de post-traitement des gaz d'échappement selon l'une des revendications précédentes, **caractérisé en ce que** le moyen d'injection (12) présente au moins une tuyère d'injection (14) et est maintenu coaxial dans ou sur la première extrémité (64) du tuyau d'entrée conique (60).

10. Dispositif de post-traitement des gaz d'échappement selon l'une des revendications 6 à 9, **caractérisé en ce que** le moyen d'injection (12) est placé par rapport au tuyau d'entrée conique (60) de telle manière que l'agent réducteur est injecté de manière centrale et coaxiale dans le flux de gaz de gaz d'échappement (2) de forme spiralée dans l'intérieur du tuyau d'entrée conique (60).
